# EUROPEAN PATENT APPLICATION

(11) **EP 4 002 242 A1**
(43) Date of publication of application: **25.05.2022**
(21) Application number: 20386052.3
(22) Date of filing: 16.11.2020
(51) Int. Cl.: G06Q 10/08, G08B 13/24

(54) **DEVICE FOR ARTICLE WITH ANTI-THEFT TAG**

(71) Applicant: Konstantinidis, Panagiotis, 54641 Thessaloniki (GR)
(72) Inventor: Konstantinidis, Panagiotis, 54641 Thessaloniki (GR)
(74) Representative: HGF

(57) **Abstract**

A device may be provided comprising an interface to obtain an identifier of an article, said article having an anti-theft tag. The device may further comprise processing circuity to obtain permission data relating to a permission to take away the article. The processing circuitry may be further to authenticate the article based on the identifier and the permission data. The processing circuitry may be further to cause, depending on a positive authentication of the article: the anti-theft tag to be removed from the article or unlocked for removal from the article; or the anti-theft functionality of the tag to be disabled.

## Description

### BACKGROUND

Premises that provide articles to users, such as stores that offer articles for sale, commonly employ strategies to prevent the theft of articles or the un-permitted removal of articles by users. This may be particularly appropriate for articles of relatively high value or for articles for which distribution may be restricted under law.

One such method for theft prevention is the use of anti-theft tags. Anti-theft tags may be affixed to articles to provide an indication to the premises, or workers therein, that an item, has been or is being removed from the premises without permission, for example by a user who has not completed a purchase of the article or may not be legally entitled to do so. Alternatively, an anti-theft tag may provide a visual indication to an article, which would render an un-permitted removal of the article from the premises obvious to an observer.

The removal or disabling of anti-theft tags is commonly performed at a point of purchase or collection by a person associated with the premises who is authorised to remove/disable the anti-theft tag. Transactions which allow permitted articles to be taken away from a premises or location, such as purchase or collection transactions, are being increasingly performed electronically, and for example with methods that do not require interaction or contact with a human operator, such as mobile payments. Thus, the need for a user to queue and interact with a human operator at a point of purchase or collection is being reduced. However, the move away from previously common-place interactions between a user and an authorised server at a point of collection or sale presents a problem for the removal or disabling of anti-theft tags of the articles that are to be taken away by the user. As a result, there is a need for new ways for inhibiting theft or un-permitted removal of articles.

### BRIEF DESCRIPTION OF THE DRAWINGS

Fig. 1 schematically illustrates an example implementation of a device for removing an anti-theft tag from an article, unlocking the tag for removal from the article or disabling the anti-theft tag;
Fig. 2 schematically illustrates an example implementation of the device that may authenticate an article based on a further verification of the authenticity of permission data obtained by the device;
Fig. 3 schematically illustrates an example implementation of the device which may authenticate an article based on a further comparison of an indication of a quantity of articles having a given second identifier which is permitted to be taken away with a count indicating a quantity of articles with the same identifier that have previously been authenticated based on the same permission data;
Fig. 4 schematically illustrates an example implementation of the device which may be configured to decode and/or de-encrypt a received identifier of the article and the obtained permission data;
Fig. 5 schematically illustrates an example implementation of the device which may actuate an actuator for a predetermined period of time to remove, unlock or disable the anti-theft tag;
Fig. 6 schematically illustrates an example implementation of the device which may inhibit authentication of a further article for tag removal, unlocking or disabling based on used permission data;
Fig. 7 is a flowchart schematically illustrating an example implementation of a method for authenticating an article for the removal of an anti-theft tag therefrom, or the unlocking or disabling thereof;
Fig. 8 is a flowchart schematically illustrating an example implementation of a method for authenticating an article for the removal of an anti-theft tag therefrom or the disabling or unlocking thereof based on a consideration of how many articles with a given identifier are permitted to be taken away by obtained permission data;
Fig. 9 is a flowchart schematically illustrating an example implementation of a method for authenticating an article for removal of an anti-theft tag therefrom, or for the unlocking of an anti-theft tag thereof for removal of the tag therefrom, or for the disabling thereof which includes decoding or decrypting obtained permission data;
Fig. 10 is a flowchart schematically illustrating an example implementation of a method for authenticating an article for removal of an anti-theft tag therefrom, or for the unlocking of an anti-theft tag thereof for removal of the tag therefrom, or for the disabling thereof which includes validating time data associated with obtained permission data;
Fig. 11 is a flowchart schematically illustrating an example implementation of a method for authenticating an article for removal of an anti-theft tag therefrom, or for the unlocking of an anti-theft tag thereof for removal of the tag therefrom, or for the disabling thereof involving a permission event identifier included in obtained permission data;
Fig. 12 schematically illustrates an example implementation of a system including the device;
Fig. 13 schematically illustrates a further example implementation of a system including the device;
Fig. 14 illustrates a non-transitory machine-readable medium storing machine-readable instructions; and
Figs. 15A-C are flow diagrams indicating an example use of an example implementation of the device by a user.

Optional features of the Figures above are illustrated by dashed lines or dashed outlines.

The presence of the optional features in the Figures is not intended to be limiting and these features may be removed from some example implementations of the device and method described herein.

### DETAILED DESCRIPTION

According to the present disclosure, a device may obtain an identifier of an article having an anti-theft tag. The anti-theft tag may be attached or otherwise affixed to the article, or the anti-theft tag may be integrated with the article. The anti-theft tag of the article may be locked. The anti-theft tag may be unlockable for removal from the article (e.g. for removal of the tag from the article by a user). The device may authenticate the article for removal, unlocking or disabling of the anti-theft tag based on the obtained identifier and on obtained permission data relating to permission to take away the article. The device (e.g. processing circuitry of the device) may be to cause the removal of the anti-theft tag from the article or the unlocking of the tag for removal from the article (e.g. for removal from the article by a user) or the disabling of the anti-theft functionality of the anti-theft tag depending on a positive authentication of the article.

The device may allow for automatic anti-theft tag removal from the article, for automatic unlocking of the tag for removal from the article, or for automatic disabling of the anti-theft functionality of the tag, which may help a user (e.g. customer) to avoid an interaction with a human operator, thereby efficiently and securely permitting articles to be taken away from a store or collection point and enabling an efficient method for obtaining (e.g. pre-ordered or pre-purchased) articles by a user (e.g. customer). This helps to eliminate the need for customers to come into close proximity to human operators (e.g. the seller's staff) who may otherwise be required to remove the anti-theft tag from the article.

In the example implementations that follow, the device may be connected to a network (e.g. the Internet) over a network connection. The network may comprise additional networked entities, such as a server. The additional networked entities may perform at least some of the functionality for authenticating the article for anti-theft tag removal, unlocking or disabling or enhance/extend the indications or information provided to the user of the device.

Alternatively, it may be that the device is not connected to a network or it may be that the device does not rely on a network connection for authenticating the article (e.g. or for removing the tag therefrom or for unlocking the tag for removal therefrom or for disabling the tag), e.g. the device may be a stand-alone device and the functionality for performing the authentication of the article for anti-theft tag removal, unlocking or disabling may be provided on, and performed by, the device itself. In examples in which the device is not connected to the network, the device may be more easily installed and used without additional infrastructure (or in the event of a network outage).

According to some example implementations, the device may enable removal, unlocking or disabling of the anti-theft tag of the article without direct physical contact by the user with the device, which provides hygienic anti-theft tag removal, unlocking or disabling by a user (e.g. customer) due to reduced contact by users with surfaces.

It will be understood that, although removing the anti-theft tag and unlocking the anti-theft tag for removal are discussed as alternatives herein, removing the anti-theft tag may involve unlocking the anti-theft tag for removal.

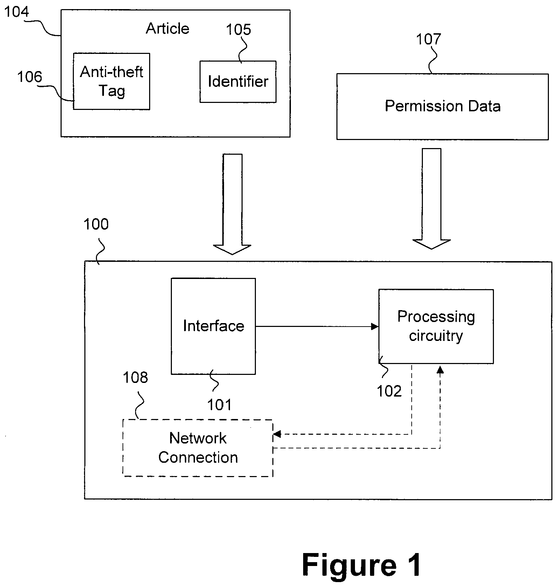

Fig. 1 is an illustrative example of device 100 for removal of an anti-theft tag 106 from an article 104 or for unlocking of an anti-theft tag 106 for removal from an article 106 (e.g. for removal of the tag from the article by a user) or for disabling an anti-theft functionality of an anti-theft tag 106 of an article 104. The device 100 may comprise an interface 101 and processing circuitry 102. The interface 101 may be for obtaining an identifier 105 of an article 104. The processing circuitry 102 may be in communication with the interface 101 so as to obtain the identifier 105 therefrom. The processing circuitry 102 may be to obtain permission data 107 relating to a permission (e.g. of a user, e.g. a customer) to take away the article 104 (e.g. to take the article 104 out of a store or away from a collection point). The processing circuitry 102 may be to authenticate the article 104 for removal of the tag 106 therefrom, for unlocking of the tag 106 for removal therefrom or for disabling the anti-theft functionality of the tag 106 based on the identifier 105 and the permission data 107. The processing circuitry 102 may be to, depending on a positive authentication of the article for tag removal or tag unlocking or for disabling the anti-theft functionality of the tag, cause removal of the anti-theft tag 106 from the article, cause unlocking of the anti-theft tag 106 for removal from the article, or cause disabling of the anti-theft functionality of the anti-theft tag 106. For example, the processing circuity 102 may be to actuate an anti-theft tag remover, unlocker or disabler (not shown in Fig. 1) for removing, unlocking or disabling the tag or may be to provide an indication (e.g. to a security system (such as to a server thereof), e.g. of a supplier or seller of the article, for example which is to detect the anti-theft tag and determine whether to trigger an alarm or alert in response to the detection of the tag, for example based on a detected identifier of the tag and a data structure such as a database, the data structure storing tag identifiers for triggering the alarm or alert) that an alarm or alert (e.g. a theft alert) is not to be triggered based on detection of an anti-theft tag 106 (to thereby disable the anti-theft functionality of the tag 106).

By causing the anti-theft tag 106 to be removed from the article 104, by unlocking the anti-theft tag 106 for removal from the article, or by causing the anti-theft functionality of the anti-theft tag 106 to be disabled, depending on a positive authentication of the article by the processing circuitry based on the identifier 105 and the permission data 107, it can be better ensured that the tag 106 can be removed from the article, unlocked for removal from the article or have its anti-theft functionality disabled only when the user (e.g. customer) is permitted (e.g. by the permission data) to take away the article (e.g. identified by the identifier). This allows secure, automatic anti-theft tag removal, unlocking or disabling, for example when there are no staff members present to perform the tag removal, unlocking or disabling, for example as part of a product purchase or ordering/collection process.

Device 100 may further comprise a network connection 108. The network connection 108 may be a wired or an unwired network connection, and may be, for example, a local area network (LAN) connection, a wide area network (WAN) connection or a cellular network connection. The network connection 108 may be a short, medium or long range wireless network connection, and may be, for example, a radio access network (RAN) connection. In some example implementations, the network connection may be e.g. a WiFi or a Bluetooth network connection. The network may comprise one or more devices external to the device 100, such as a (e.g. security) server, which may be in communication with the device 100 by way of the network connection 108.

As mentioned above, the interface 101 may be to obtain (e.g. receive or detect) an identifier 105 of the article 104. For example, the interface 101 may be to obtain the identifier 105 of the article 104 when the identifier 105 of the article 104 is presented in a vicinity of the interface 101. The identifier 105 may be affixed to the article 104. For example, the identifier 105 may be provided on a label or tag affixed to the article 104. However, the identifier 105 is not so limited and may for example be integrated with the article 104.

In some example implementations, the identifier 105 may comprise a product code (or other unique article identifier) identifying the article 104. The product code may comprise an alphanumeric code. The product code may be unique to the article 104 or unique to the type of the article. For example, the product code may identify the general characteristics of the article, such as the product type, but a given product code may be shared between products with different specific characteristics, such as colour and size etc. Alternatively a product code may be shared by articles with the same value.

It may be that the identifier 105 of the article is encoded, such as optically encoded (e.g. as a barcode or quick response (QR) code), encoded in a radio signal, in an audio signal, or in a computer readable format, such as e.g. an xml file or a JSON file. For example, the identifier may comprise an (e.g. optically) encoded product code for the article, e.g. a product code optically encoded as a barcode.

The interface 101 for obtaining the identifier 105 may be a contactless interface (e.g. an interface which does not require physical contact with the interface to enable user inputs to be provided by way of the interface) or may be an interface to receive a manual user input through direct physical contact with the device 100, or a portion thereof. For example, in the latter case, the interface may be configured to receive the identifier by way of a touch or compression input, such as through a touch panel or keypad into which the user inputs the identifier 105. In the former case, the interface may be to detect the identifier 105 when the identifier is presented in a vicinity of the device 100 (or of the interface 101 of the device 100). For example, the interface 101 may be configured to obtain the identifier 105 through capturing of optical information (such as via image capture), or through signalling over a medium, such as over a radio frequency. For example, the interface 101 may comprise a camera, or scanner such as an optical, ultra-violet or infra-red scanner. Alternatively, the interface may comprise a receiver, such as a radio receiver and may be configured to receive Bluetooth or Near-Field Communication (NFC) signalling. Alternatively, the interface may comprise a microphone. In some examples, the interface 101 may comprise an optical code reader such as a barcode reader to read an optical code such as a barcode of the article 104 presented in the vicinity thereof. In other examples, it may be that the identifier 105 is provided by way of a Radio Frequency Identification (RFID) tag of the article 104; in this case, it may be that the interface 101 comprises an RFID tag reader for reading an RFID tag presented in the vicinity thereof. In other examples, the identifier 105 may be provided by way of a chip comprising the identifier 105, the chip being configured for near field communication (NFC), in which case the interface 101 may comprise an NFC reader to read the identifier 105 of the article 104 from the chip by NFC.

It may be that the interface 101 is to decode encoded identifier data to provide decoded identifier data to the processing circuitry 102, or it may be that the processing circuitry 102 is to decode encoded identifier data obtained from the interface 101. Thus, it may be that the interface 101 is to provide the identifier 105, the encoded identifier data or the decoded identifier data to the processing circuitry 102.

According to some example implementations, the interface 101 may be disposed at or near a surface of the device 100. For example, if the interface 101 is configured to receive manual user input through contact with the user, the interface 101 may be disposed on a surface of the device 100 (e.g. by way of a touch panel interface). Alternatively, for example, if the interface 101 is a contactless interface, it may be disposed on a surface of the device 100 (e.g. by way of a camera or scanner) or beneath or below a surface of the device 100 (e.g. by way of a near-field communications reader), for example within a range of a wireless communication scheme employed for the (e.g. contactless) receipt of the identifier 105 by the interface 101.

The article 104 may be an article which a user (e.g. customer) has permission to take away. For example, the user may have permission to take the article 104 away from a location such as the article's current location, which may be a location such as a store or a collection point. The collection point may comprise a store, such as a store selling products, or may be a location or premises providing different, or limited services, for example, a post office, warehouse, or locker etc. In either case, by the act of purchasing or ordering the article 104, the user may be provided with permission to remove the article 104 from its location. It may be that the user has permission to take the article 104 away from said location as a result of the user having purchased or ordered the article, for example where the article may have been paid for in full or where the article may have been paid for in part (e.g. a deposit may have been paid), for example together with an agreement for the user to make one or more future payments. Alternatively, a purchase agreement may have been put in place for the article 104, such a credit agreement or a try-before-you-buy agreement.

As mentioned above, permission for the user to take the article 104 away may be provided by permission data 107 relating to the permission to take the article away. The permission data 107 may comprise purchase or order data relating to a completed purchase or a completed order of the article 104, for example by the user from a supplier or seller. The permission data 107 may for example be based on a purchase or order agreement with the supplier or seller of the article 104. The permission data 107 may relate to a purchase or ordering of the article 104 and may indicate that taking the article away, e.g. away from a source such as a current location of the article (e.g. store or collection point), is permitted (e.g. by the supplier or seller of the article). The permission data may be obtained (e.g. by the user, e.g. from a purchasing or ordering system), for example, based on a purchase or collection agreement (e.g. between the user and a supplier or seller of the article), for example from an electronic (e.g. online or in-store) purchasing or ordering system, such as a mobile payment system, or by any other suitable means.

The purchase or ordering (either in full, in part, or e.g. contractually obligated, for example to be completed at a later date) of the article 104 may have been conducted within the same location or premises in which the article 104 resides prior to the anti-theft tag 106 being disabled, unlocked for removal, or removed. For example, the article 104 may have been purchased within a store and the article 104 may be presented to the device 100 for removal, unlocking or disabling of the anti-theft tag 106 before the article 104 is subsequently removed from the store. Alternatively, the article 104 may have been purchased or ordered remotely, e.g. online. For example, the article 104 may have been purchased or ordered online and the article 104 may be presented at the device 100 subsequent to purchase/ordering for collection from e.g. a collection point, for tag removal, unlocking or disabling.

The device 100 may comprise an interface for receiving the permission data 107. The user may provide the permission data 107 to the device 100, for example by way of the interface. In some examples, the permission data 107 may be entered by a user (e.g. customer) to the device 100, for example by way of a touch-panel interface of the device 100. In other examples, the permission data 107 may be input to (and obtained by) the device 100 by a presentation of the permission data 107 (e.g. by the user) to the interface of the device 100, for example a presentation of the permission data 107 in a vicinity of the interface. For example, the user may present the permission data 107 in the vicinity of the interface by way of a physical print out copy, or electronic copy, such as on a smart phone or other user device. The interface may comprise a scanner, near-field communication reader or optical code reader such as a barcode reader or a quick response (QR) code reader. The interface (where provided) by which the permission data is provided to the device 100 may be the same or a different interface from the interface for obtaining the identifier 105 of the article 104.

Additionally or alternatively, the permission data 107 may be provided to the device 100 directly from an authorised source (e.g. from a server in communication with the device 100 by way of network connection 108).

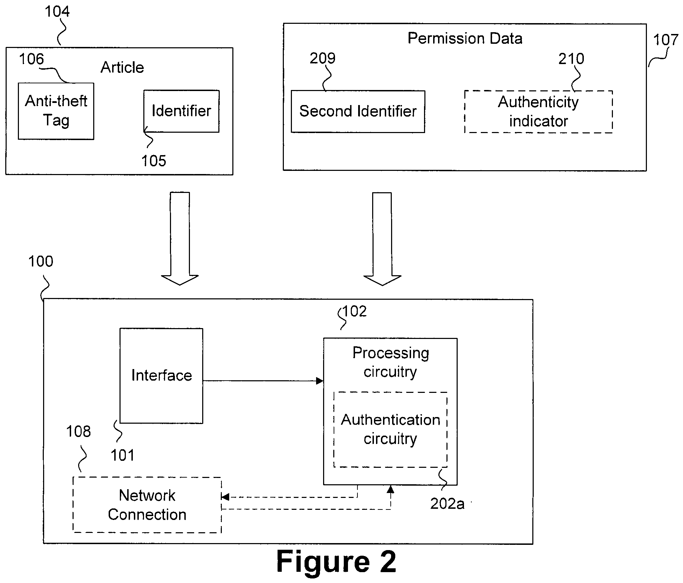

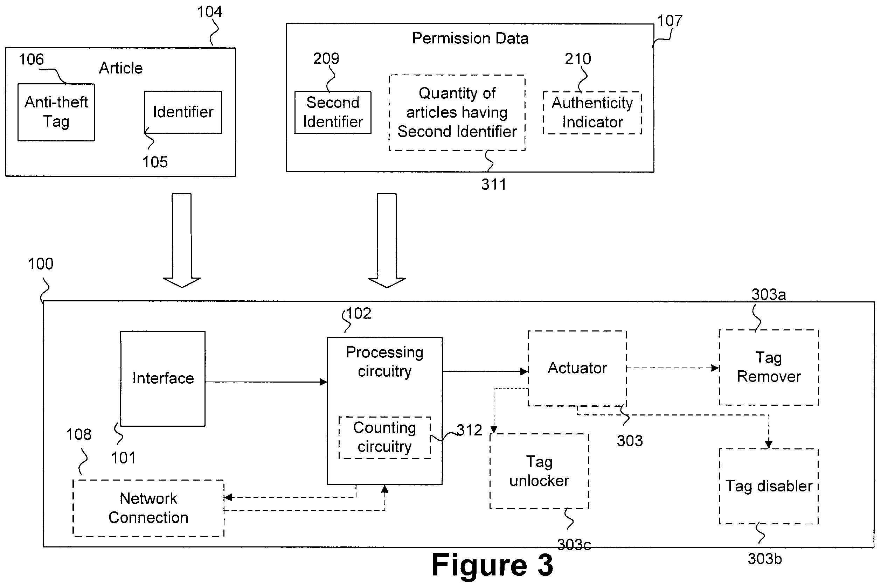

The permission data 107 may comprise a purchase or order identifier (such as a purchase or order code). Additionally or alternatively, as shown in Fig. 2, in some example implementations, the permission data 107 may comprise at least a second identifier 209 of the article 104. The second identifier 209 may include a product code (or other unique article identifier) of the article 104. The product code may have any of the features of the product code mentioned above in relation to the identifier 105. The second identifier 209 may have any of the features of the identifier 105. The second identifier 209 of the article 104 may be identical to the identifier 105 of the article 104. As shown in Fig. 3, in some example implementations, the permission data 107 may further comprise an indicator of a quantity 311 of articles having the second identifier 209 which are permitted to be taken away (e.g. based on purchase or order data). The permission data 107 may further comprise time data relating to a time of expiry of the permission data 107.

The permission data 107 may comprise encoded permission data. The permission data 107 may be optically encoded, encoded in a radio signal, encoded in a machine-readable format, etc. For example, the permission data 107 may be provided by way of an optical code such as a QR code. As mentioned above, the interface for obtaining the permission data 107 may comprise an optical code reader, such as a QR code reader, to read an optical code comprising the permission data 107, such as a QR code, or an nth dimensional barcode such as a 1-dimensional or 2-dimensional barcode, presented in the vicinity thereof. However, the encoding of the permission is not so limited and may be encoded by any means that allows the permission data to be obtained and used (e.g. by the processing circuitry 102 or the external server) for the authentication of the article 104. It may be that the interface or the processing circuitry 102 of the device 100 is to decode the encoded permission data. In another example (e.g. when the device 100 has network connectivity), it may be that the processing circuitry is to transmit the encoded permission data to an external server which may be to decode the encoded permission data.

The processing circuitry 102 may be configured to obtain the permission data 107. For example, the processing circuitry 102 may be to receive the permission data 107 from an interface (e.g. the interface 101), or from a further (e.g. networked) device (e.g. a server), for example by way of network connection 108. In this case, the processing circuitry 102 may comprise receiving circuity for receiving the permission data 107. The processing circuitry 102 may be to retrieve the permission data 107, for example from a local memory or storage device or from a further (e.g. networked) device (e.g. a server). For example, it may be that the device 100 comprises the memory for receiving permission data 107, for example from the further (e.g. networked) device (e.g. a server), for example during or in advance of a user (e.g. customer) using the device 100 to remove, unlock or disable the anti-theft tag 106. The processing circuitry 102 may comprise retrieving circuitry for retrieving the permission data 107.

In some example implementations, the permission data 107 and the identifier 105 may both be optically encoded. Alternatively, the permission data 107 and the identifier 105 may be encoded differently (e.g. differently from each other).

As mentioned above, the processing circuitry 102 may be to authenticate the article 104 for tag removal or unlocking or for disabling anti-theft functionality of the tag 106 based on the identifier 105 and the permission data 107. The processing circuitry 102 may be to cause the removal, unlocking or disabling of the anti-theft functionality of the tag 106 depending on a positive authentication of the article 104 for tag removal or unlocking or for disabling the anti-theft functionality of the tag 106. The processing circuitry 102 may comprise authentication circuitry (see authentication circuitry 202a in Fig. 2) to perform the authentication of the article 104.

The processing circuitry 102 may be to authenticate the article 104 for tag removal or unlocking or for disabling the anti-theft functionality of the tag 106 based on a second identifier 209 of the article 104 obtained from the permission data (or data derived therefrom) and the (first) identifier 105 obtained from the interface 101 (or data derived therefrom). In some example implementations, the processing circuitry 102 (or authentication circuitry of the processing circuitry) may be configured to perform the authentication by comparing the identifier 105 obtained from the interface 101 (or data derived therefrom) with the second identifier 209 of the permission data 107 (or data derived therefrom). The processing circuitry 102 may be to match the first and second identifiers (or data derived therefrom) to thereby authenticate the article for tag removal or unlocking or for disabling of the anti-theft functionality of the tag 106.

Alternatively, if the device 100 is connected to a network by a network connection 108, the processing circuitry 102 may be to perform the authentication of the article 104 by sending the identifier 105 (or data based thereon) and the permission data 107 (or data based thereon) to an external server for comparison and receiving data relating to a result of the comparison of the identifier and the permission data 107 from the server, for example by way of the network connection 108. The processing circuitry 102 may be to authenticate the article 104 for tag removal, unlocking or disabling based on receipt of data from the server, such as data indicating a match between the identifier 105 and at least a portion of the permission data 107.

In some example implementations, the processing circuitry 102 may be to store or cause storage of (e.g. locally or on a server to which the device 100 is connected, e.g. by network connection 108) data relating to articles which have had their tags removed, unlocked or disabled based on the permission data. For example, the processing circuitry 102 may be to store or cause storage of identifiers of the articles which have had their tags removed, unlocked or disabled based on the permission data. The processing circuitry 102 may be to authenticate the article 104 for tag removal, unlocking or disabling further depending on a comparison (which may be performed locally on the device 100, e.g. by processing circuitry 102, or remotely at a server connected to the device 100, e.g. by network connection 108) of the identifier 105 (or data based thereon) with stored data (e.g. locally or at server) relating to articles which have had their tags removed, unlocked or disabled based on the permission data 107. If the comparison indicates (e.g. by way of the comparison performed by the processing circuitry 102 or by way of an indication received from the server) that the article 104 has yet to have its tag removed, unlocked or disabled based on the permission data 107, the article 104 may be positively authenticated (e.g. assuming that each other implemented authentication operation relating to authentication of the article also indicates a positive authentication). If the comparison indicates (e.g. by way of the comparison performed by the processing circuitry 102 or by way of an indication received from the server) that the article 104 has already had its tag removed, unlocked or disabled based on the permission data 107, the article 104 may not be positively authenticated (e.g. may be negatively authenticated). It may be that the device 100 or the server maintains a data structure such as a database on a storage thereof, where the data structure may comprise data relating to articles which have had their tags removed, unlocked or disabled based on the permission data. For example, it may be that the data structure may be updated in response to a positive authentication of the article by the processing circuitry (e.g. to indicate that the article 104 has had its tag 106 removed, disabled or unlocked based on the permission data 107).

As mentioned above, the permission data 107 may further comprise an indicator of a quantity 311 of articles having the second identifier 209 which are permitted to be taken away (e.g. by the user, e.g. based on purchase or order data). It may be that a user (e.g. customer) has purchased or is to purchase, or collect etc one or more articles, such as a plurality of articles, and the permission to take away each article of the one or more articles is included in or indicated by the permission data 107. For example, it may be that the permission to take away provided by the permission data relates to one or more articles grouped, e.g. in a single receipt. The grouping of the plurality of articles may comprise an association of the one or more articles to a virtual basket, where permission to take away the articles may be granted with reference to the virtual basket. The virtual basket may comprise (e.g. second) identifiers of the article(s) associated therewith, for example together with indicator(s) of quantity(ies) of articles having the respective (e.g. second) identifier(s) which are permitted to be taken away based on the permission data 107.

In some example implementations the processing circuitry 102 may authenticate the article 104 for tag removal, unlocking or disabling further depending on the indicator of the quantity 311 of articles having the second identifier which is permitted to be taken away.

For example in order to improve the security of the automatic removal of the anti-theft tag 106 from the article 104, unlocking of the anti-theft tag 106 for removal from the article 104, or disabling the anti-theft functionality of the anti-theft tag 106, the processing circuitry 102 may be to check the number of articles having the second identifier 209 presented at the device 101 for removal of the anti-theft tag 106 therefrom, for unlocking of the anti-theft tag 106 for removal therefrom, or for disabling the anti-theft functionality of the tag 106 thereof, against the quantity 311 of articles permitted to be taken away indicated by the permission data 107.

In some example implementations, the processing circuitry 102 may be to authenticate the article 104 further depending on the indication provided in the permission data 107 of the quantity 311 of articles permitted to be taken away having the (same) second identifier 209 and a count indicating a quantity of articles having the second identifier 209 previously authenticated based on the permission data 107 (e.g. by the device 100). The count may be maintained by the device 100. For example, as shown in Fig. 3, the processing circuitry 102 may further comprise counting circuitry 312 to count the articles having the second identifier 209 authenticated by the device based on the permission data 107. The count may be updated by the processing circuitry in response to each positive authentication of an article having the second identifier.

For example, the count may be incremented in response to a positive authentication of an article having the second identifier. To authenticate the article 104, the processing circuitry 102 may compare the count with the indication of the quantity of articles having the second identifier 311. If the count is less than the indication 311, the article 104 may be authenticated (further based on the further authentication process elements described herein, e.g. the comparison of the first and second identifiers). If the count is greater than or equal to the indication 311, it may be that the article 104 is not authenticated. In this case an indication of a failure of authentication may be provided, for example a visual or audio alert or indication may be provided. It may be that the device 100 is configured to not cause removal, unlocking or disabling of the anti-theft tag 106 based on a failure of authentication of the article (e.g. based on the count being greater than or equal to the indication 311).

Alternatively, the count may be initialised at a value corresponding to the indication of the quantity of articles having the second identifier 311 and may be decremented in response to a positive authentication of an article having the second identifier. In this case, it may be that if the count is greater than or equal to one, the article 104 may be authenticated (further based on the further authentication process elements described herein). If the count is less than one, it may be that the article 104 is not authenticated.

By the comparison of the quantity provided in the permission data and the count to further authenticate the article for tag removal, unlocking or disabling, it can be better ensured that permission data 107 is not fraudulently re-used to remove, unlock or disable tags from articles having identifier 107. This is particularly (but not exclusively) useful when the device 100 is not connected to the network (or is not to rely on a network connection), and so cannot (or is not to) communicate with a central source (e.g. external server) in order to determine prior use or exhaustion of the permission data 107.

In some example implementations, if the device 100 is connected to a network by network connection 108, the counting and/or comparison of the count to the quantity indication 311 may be performed, at least in part, by an external server and the results of the respective operations may be communicated to the device 100 for authentication of the article 104.

As mentioned above, the permission data 107 may additionally or alternatively comprise a purchase or order identifier (such as a purchase or order code). In this case, the processing circuitry 102 may be to cause the permission data 107, or data based thereon, to be sent to an external server by way of network connection 108. The external server may comprise purchase or order data associated with the purchase or order identifier and comprising information relating to the contents of a purchase or order by the user. For example the purchase or order data may identify the article as being included in a purchase or order by the user, for example by way of a second identifier 209 or by way of a second identifier 209 and quantity data 311 indicating a quantity of articles having the second identifier 209 which is permitted to be taken away. In this case, the processing circuitry 102 of the device 100 may be to send the permission data 107 (or data based thereon) to the external server, which may obtain the purchase or order data associated with the purchase or order identifier (e.g. from a purchase or order database) based on the permission data 107 (e.g. the purchase or order identifier). The external server may identify the article as being part of a purchase or order by the user based on the purchase or order data associated with the purchase or order identifier.

The external server may communicate a second identifier 209 of the article 104 to the device 100 over the network connection 108 based on the identification of the article in the purchase or order data. The processing circuitry 102 of the device 100 may then compare the second identifier 209 of the article 104 obtained from the external server (or data derived therefrom) with the first identifier 105 (or data derived therefrom) to authenticate the article 104 for tag removal or unlocking or for disabling the anti-theft functionality of the tag 106. Alternatively, the processing circuitry 102 of the device 100 may further transmit the identifier 105 of the article 104 to the external server in addition to the permission data 107 (or data based thereon). In this case, it may be that the external server is to compare the second identifier 209 of the article 104 obtained from the purchase or order data (or data derived therefrom) with the received first identifier 105 (or data derived therefrom) to authenticate the article 104 for tag removal or unlocking or for disabling the anti-theft functionality of the tag 106. It may be that the external server is to send back to the device 100 a positive or negative authentication of the article 104 for tag removal or unlocking or disabling of the anti-theft functionality of the tag 106. It may be that the authentication of the article 104 by the processing circuitry 102 of the device 100 is based on the receipt of the positive or negative authentication of the article 104 received from the external server.

In another example, the processing circuitry 102 of the device 100 may store purchase or order data obtained from an external server, the purchase or order data being associated with a purchase or order identifier and comprising information relating to the contents of a purchase or order by the user. For example, the information relating to the contents of the purchase or order by the user may identify the article 104 as being part of an order or purchase by the user. In this case, the processing circuitry 102 of the device 100 may be to obtain the purchase or order data based on the permission data 107 (e.g. purchase or order data associated with a purchase or order identifier in the permission data) and to identify the article 104 as being part of an order or purchase by the user based thereon. The processing circuitry 102 of the device 100 may be to positively authenticate the article 104 for tag removal or unlocking or for disabling of the anti-theft functionality of the tag based on the identification of the article 104 as being part of the order or purchase by the user associated with the permission data 107. This identification may be based on comparison of the identifier 105 with a second identifier of the article from the purchase or order data.

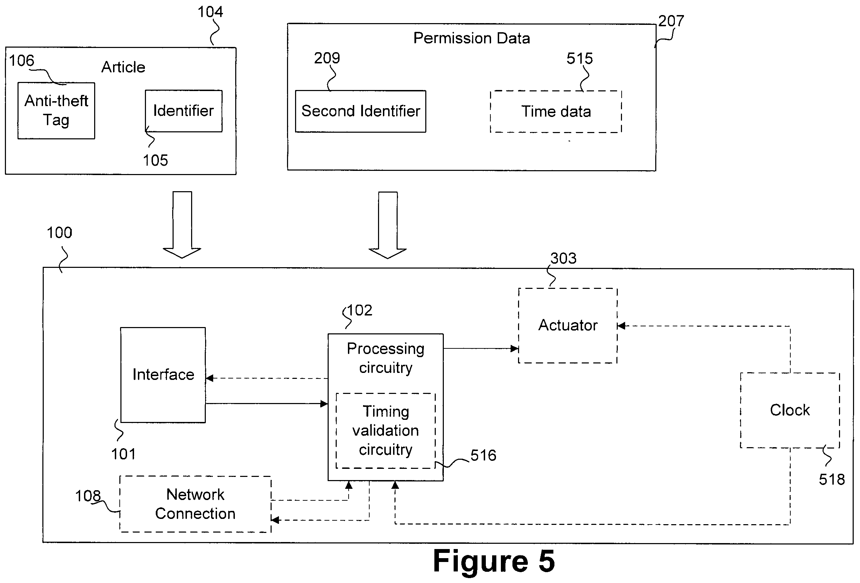

As shown in Fig. 5, in some example implementations it may be that the processing circuitry is to authenticate the article 104 based further on time data 515, such as time data 515 associated with permission to take away the article, such as indicating a time (e.g. date, time of day or date and time of day) of a purchase or order transaction relating to the article 104, or a time at which the permission data 107 is to expire (e.g. a date, time of day or date and time of day beyond which the permission data is no longer valid for use in tag removal, unlocking or disabling). In some example implementations, the permission data 107 may further comprise the time data 515. For example, it may be that to inhibit mistaken or fraudulent use of permission data 107, such as the permission data being re-used to authenticate articles to which the permission to take away was not granted (i.e. articles sharing the same identifiers as the permitted articles but in addition to the permitted articles), the time data is used to time-limit the valid use of the permission data 107 for tag removal, unlocking or disabling.

Thus, it may be the permission data 107 further comprises time data 515. The processing circuitry 102 may be to cause removal of the anti-theft tag 106 from the article 104, or to cause unlocking of the anti-theft tag 106 for removal from the article 104, or to cause disabling of the anti-theft functionality of the tag 106 further based on a positive timing validation based on the time data 515 and current time information (e.g. which may include the current date, the current time of day or the current date and time of day). It may be that timing validation circuitry 516 of the device 100 may compare the current time information with an obtained (e.g. received or derived) expiry time (e.g. expiry date, time of day or date and time of day) of the permission data based on the time data 515. If the comparison between the current time information and the expiry time indicates that the validity of the permission data 107 has not yet expired (i.e. when the article 104 is presented at the device 100 for tag removal, unlocking or disabling), the article 104 may be positively authenticated based on the permission data 107, and further based on the optional authentication described herein. Alternatively, it may be that if the time validation circuitry 516 indicates that the validity of the permission data 107 has expired based on the comparison to the current time information, the article may not be positively authenticated and the processing circuitry 102 may not cause removal, unlocking or disabling of the anti-theft tag 106.

It may be that the processing circuitry 102 is to determine the time of expiry of the permission data 107 based on the time data 515. In an example, the time data may indicate a time of purchase of an article, and the processing circuitry 102 may consider the permission data 107 to be valid for a predetermined time period (e.g. a time period of up to 10, 15, 30 minutes from the time of purchase or ordering of the article 104). Alternatively, the time of expiry of the permission data 107 may be the closing time of the premises or store on a particular date (e.g. a date of purchase or ordering of the article 104 or a designated date of collection of the article by the user). For example, permission data 107 issued on a given business day may permit an article to be taken away on that business day and cannot be used beyond the business day.

The current time information may be obtained by the processing circuitry 102 by way of receiving current time information. The current time information may be externally generated, such as current time information received via the network connection 108 or e.g. via radio signalling from a remote source by a receiver (not shown), or the current time information may be obtained from a clock 518 of the device 100.

In some example implementations, it may be that the device 100 is connected to a network via the network connection 108, and the current time information and/or at least part of the time data may be provided by an external server. For example, it may be that an indication of the timing validity of the permission data 107 may be stored on a server and may be updated by the server upon expiry of the permission data 107. It may be that the permission data 107 may not include the time data 515 but instead time data 515 associated with the permission data 107, or an indication of the timing validity of the permission data, may be obtained by the device 100 from the server. It may be that at least part of the time data 515 may be provided by the server and at least part of the time data may be stored locally on the device 500.

In some example implementations, it may be that the comparison of the time data to the current time information may be performed by the server and the result of the comparison and/or the validation of the time data may be provided to the device 100 for authentication of article 104. Positive authentication of the article 104 for tag removal, unlocking or disabling by the processing circuitry 102 may depend on a positive validation of the time data (e.g. by the server).

By performing the timing validation based on the time data 515 and current time information, it can be better ensured that the permission data 107 is not re-used with the device 100 (or with a similar device) to mistakenly or fraudulently perform tag removal, unlocking or disabling on another article which a user (e.g. customer) does not have permission to take away. This is particularly (but not exclusively) useful where the device 100 is not connected to the network (or is not to rely on a network connection) and so may not be able to tell from a central source (e.g. a server) if the permission data 107 has already been previously used to authenticate an article for tag removal, unlocking or disabling.

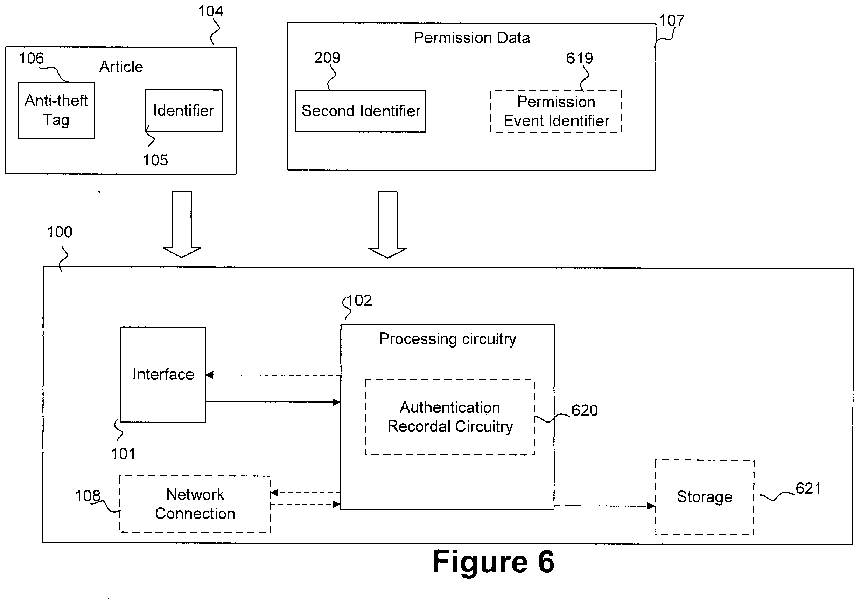

As shown in Fig. 6, in some example implementations the processing circuitry 102 may perform authentication of the article 104 based further on a permission event identifier 619 (e.g. a purchase or order number or code). It may be that the permission data 107 comprises the permission event identifier 619.

It may be that to inhibit mistaken or fraudulent use of permission data 107, such as the permission data being re-used to authenticate articles to which the permission to take away was not granted (i.e. articles sharing the same identifiers as the permitted articles but in addition to the permitted articles, for example if a receipt of purchase is re-used to remove, unlock or disable the tags of a second set of non-purchased but identical or similar articles) a permission event identifier is used to limit the valid use of the permission data.

In some example implementations, the permission data 107 may comprise a permission event identifier 619 (see Fig. 6), and the processing circuitry 102 may be to record or cause recordal of (e.g. based on a determination that all articles associated with the permission data which are permitted to be removed, unlocked or disabled have had their tags removed, unlocked or disabled where required) data based on the permission event identifier depending on positive authentication of the article based on the permission data to thereby inhibit authentication of a further article based on said permission data. The permission event identifier 619 may indicate a permission event relating to the permission data 107 such as a purchase or ordering event or an establishment of an agreement for taking the article away. The permission event identifier may be unique such that events relating to permission being granted for e.g. different users, different transactions, different articles, or different baskets of articles, do not have the same permission event identifier. However, it may be that the permission event identifiers are re-usable, for example, they may be re-used after a pre-determined period of time from the previous issuing of the identifier.

In some example implementations, it may be that the processing circuitry 102 (e.g. authentication circuitry of the processing circuitry, not shown) is to compare or cause comparison (e.g. locally or at a server to which the device 100 is connected, e.g. by network connection 108) of a permission event identifier included in the permission data to previously stored (e.g. locally or at a server to which the device 100 is connected, e.g. by network connection 108) permission event identifiers of articles authenticated previously. It may be that the comparison indicates a positive match between a permission event identifier 619 of permission data 107 relating to currently presented article 104 and a permission event identifier of a previously positively authenticated article. It may be that, depending on such a determination, the article 104 is not positively authenticated. For example, if a server performs the comparison, the device 100 (e.g. processing circuitry 102) may receive an indication from the server that the article 104 is not to be positively authenticated. Alternatively, it may be that the comparison does not indicate a positive match between a permission event identifier 619 of permission data 107 and a permission event identifier of a previously positively authenticated article, and it may be that the article 104 is positively authenticated. For example, if a server performs the comparison, the device 100 (e.g. processing circuitry 102) may receive an indication from the server that the article 104 is to be positively authenticated. The permission event identifier 619 (or data based thereon) associated with the permission data 107 relating to the article 104 may then be stored or recorded (e.g. locally or at the server or both) for future comparison.

In some example implementations (for example but not exclusively when the device is not connected to the network, or is not to rely on a network connection), it may be that the recordal of data relating to the permission event identifier 619 of permission data 107 is performed by authentication recordal circuity 620 of the processing circuitry 102 of device 100. The device 100 may further comprise storage 621 to store data recorded based on permission event identifiers.

As indicated above, it may be that the device 100 is connected to a network via network connection 108, and it may be that data based on the permission event identifier may be stored on a server external to the device 100, and retrieved by or from said server. For example the permission event identifier 619 may be provided to the device 100 (e.g. processing circuitry 102 of device 100) by way of the server. For example, it may be that the permission data 107 does not include the identifier 619 but may instead provide data (e.g. permission data, e.g. an order or purchase identifier) associated with the identifier 619 located on the server, thereby allowing the identifier 619 to be retrieved therefrom. Previously recorded identifiers may be stored locally on the device 100 or at the sever. Previously recorded identifiers may be retrieved from the server by the device 100 such that the comparison of the identifier 619 and the previously recorded identifiers may be performed by the device 100. In some example implementations, it may be that the comparison of the permission event identifier 619 and the previously recorded identifiers may be performed at least in part by the server and data relating to the result of the comparison may be provided to the (e.g. processing circuitry 102 of) device 100 from the server via the network. For example, the comparison of the identifier 619 and the previously recorded identifiers may be performed by the server and an indication of the result of the comparison (or an indication of whether the article is to be authenticated) may be provided to the device 100 from the server via the network.

In some example implementations, the processing circuitry 102 may authenticate the article 104 further based on authenticating the permission data 107. For example, it may be that authenticating the permission data inhibits the possibility of permission data 107 being fraudulently created or altered/modified. It may be that the processing circuitry 102 of the device 100 is to authenticate the permission data 107 by verifying the permission data 107. For example, in some example implementations, it may be that the permission data 107 comprises an authenticity indicator 210 (see Fig. 2) and the processing circuitry 102 may be to authenticate the article 104 based on verifying the authenticity indicator 210. For example, the authenticity indicator 210 may comprise a digital signature. Alternatively, the permission data 107 may be verified by performing further processing of the permission data 107, for example by the processing circuitry 202. For example, it may be that the processing circuitry 102 may derive a verifiable variable or operator from the permission data or may successfully complete a validation procedure based on the permission data.

It may be that the permission data is authenticated by verification circuitry (not shown) of the processing circuitry 102, or if the device 100 is connected to a network via the network connection 108, the permission data 107 may be (e.g. sent to and) authenticated by an external server.

The anti-theft tag 106 may be an electronic article surveillance (EAS) tag, a benefit denial tag, a visual tag, or any other suitable tag for providing anti-theft functionality. The anti-theft tag 106 may be affixed to the article 104 such that it may be removed from the article 104, for example without causing damage to the article, i.e. the tag 106 may be removably affixed to the article. The anti-theft tag 106 of the article 104 may be locked. The anti-theft tag 106 may be unlockable for removal from the article 104 (e.g. for removal of the tag from the article by a user). Alternatively, the anti-theft tag may be permanently affixed to or integrated with the article. In the latter case, it may be that the anti-theft tag 106 is to have its anti-theft functionality disabled by the device 100. It may be that the anti-theft tag 106 is to be removed, unlocked for removal or disabled by device 100 to silence or disable an alerting functionality of the tag, i.e. to prevent the tag from providing an indication that the article 106 is being, or has been, taken away (e.g. out of a premises or away from a location such as a store or a collection point).

It may be that the anti-theft tag 106 comprises a plurality of metal strips including at least one strip comprising a ferromagnetic material. It may be that the anti-theft tag is configured to generate a given response when subjected to a magnetic field by way of an electro-magnetic effect. For example it may be that the tag is configured to produce harmonics in electromagnetic signals when subjected to a magnetic field. Such harmonics may be detectable when the tag enters a magnetic field, which may be provided by a source and detected by a sensor (for example at an exit from a premises).

It may be that the tag 106 is configured to cause a response in a receiver of a detector when subjected to a signal, such as a pulse emitted at e.g. 58kHz, for example as a result of an acousto-magnetic effect. It may be that in response to being subjected to a signal (e.g. a pulse at a pre-determined frequency) at least one strip of the tag may be caused to vibrate, resulting in a change of magnetisation of the tag (e.g. by way of a change in magnetisation of at least one of the strips of the tag), which may result in a change in voltage induced as a receiver (e.g. an antenna) of a detector.

It may be that the anti-theft tag 106 is to interact with a detector to cause an alert or indication to be issued by the detector to indicate that the tag (and the article having the tag) is being or has been removed from a premises, such as a store or collection point, without permission.

Alternatively, it may be that the tag 106 may use a radio frequency or microwave frequency in conjunction with a sensor and optionally an emitting source to issue such an alert.

The tag may be an RFID tag, which may utilise the effects of resonance at given electromagnetic wave (e.g. radio) frequencies to indicate the presence of the RFID tag and cause an alert to be issued based on the detection of the tag. For example, it may be that the RFID tag comprises an inductor (L) and a capacitor (C) configured to act as an electrical resonator to store the energy of electromagnetic radiation of a particular frequency (i.e. the resonant frequency at with the LC circuit oscillates) incident thereon. It may be that when an electromagnetic field of frequency close to the resonant frequency of the RFID tag is detected, the presence of the RFID tag within the field may be inferred from a drop in signal strength of the field at the resonant frequency of the tag.

Alternatively, it may be that the tag may be a benefit denial tag, which may cause damage or a visual indicator to be provided to the article when fraudulently removed (i.e. removed in an unauthorised manner or without permission) from the article.

In some example implementations, the anti-theft functionality of the tag 106 may be disabled by the device 100 by the application of a magnetic or electromagnetic field to the tag, or portions thereof, to prevent or inhibit the functional effects of the tag. For example, the tag may make use of an electro-magnetic effect and may be disabled by e.g. the device 100 subjecting the tag to a magnetic field such that a strip of the tag is magnetised and a given response (e.g. generation of harmonics in a detected signal) is no longer provided by the tag when subjected to e.g. an electro-magnetic field. It may be that tag 106 makes use of an acousto-magnetic effect to provide anti-theft functionality and the device 100 may be to subject the tag to a magnetic field to de-magnetise a strip of the tag, such that a given response (e.g. a vibration resulting in a change of magnetisation of the strip and voltage induced in a receiver of a detector) is no longer provided by the tag when subjected to e.g. a signal pulse. It may be the tag 106 is an RFID tag and it may be that the device 100 is to disable the tag by subjecting the tag, or portions thereof, to an electromagnetic field at a frequency equal to or similar to the resonant frequency of the RFID tag, such that the capacitor is destroyed, e.g. by inducing in the capacitor a voltage greater than its breakdown voltage. As a result, it may be that the RFID tag is no longer detectable from a decrease in signal strength associated with the resonant frequency of the tag. It may be that the device 100 is to disable the tag by the application of mechanical force to destroy or damage the components of the RFID tag such that they cannot operate to provide the oscillation at the resonant frequency of the device. It may be that the device 100 is to disable the anti-theft tag in response to actuation of an actuator 303 (see Fig. 3).

In some example implementations, the device 100 may be to remove the anti-theft tag 106 from the article 104 or unlock the anti-theft tag 106 for removal from the article 104 (e.g. for easy removal of the tag 106 from the article 104 by a user), for example by the application of e.g. mechanical or magnetic force or work derived therefrom. For example, the tag 106 may be affixed to the article via a mechanically or magnetically operable coupling to the article 104 and the device 100 is to remove the tag 106, or unlock the tag 106 for removal, from the article by the application of mechanical or magnetic force to the coupling. It may be that the device 100 is to remove the anti-theft tag 106, as described above by the operation of a tag remover (shown in Fig. 3, 303a), or unlock the anti-theft tag 106 for removal from the article 104 by the operation of a tag unlocker (shown in Fig. 3, 303c), in response to actuation of the actuator 303.

As shown in Fig. 3, is some example implementations, the device 100 may further comprise one or more of an anti-theft tag remover 303a, an anti-theft functionality disabler 303b, an anti-theft tag unlocker 303c. The tag remover 303a or unlocker 303c may, for example, be to remove or unlock the tag by applying mechanical force, magnetic force or mechanical and magnetic force thereto. However, the tag remover 303a and unlocker 303c are not so limited. The tag anti-theft functionality disabler 303b may, for example, be to disable the anti-theft functionality of the tag with the application of a magnetic field or an electromagnetic field to at least a portion of the tag. However, the disabler 303b is not so limited.

The processing circuitry 102 may be to cause removal of the anti-theft tag 106 from the article 104, to cause unlocking of the anti-theft tag 106 for removal from the article 104, or to cause disabling of the anti-theft functionality of the anti-theft tag 106 (e.g. in some examples when the anti-theft tag 106 is presented to the device 100) depending on a positive authentication of the article 104 by the processing circuitry 102. For example, the processing circuitry 102 may be to actuate the anti-theft tag remover 303a, the anti-theft functionality disabler 303b or the anti-theft tag unlocker 303c by way of the actuator 303, for example (e.g. automatically) in response to a positive authentication of an article by the processing circuitry 102. It may be that the processing circuitry 102 is in communication with the actuator 303 so as to actuate the actuator 303 depending on a positive authentication of the article 104. It may be that the tag remover 303a is to cause removal of the anti-theft tag 106 from the article 104 in response to actuation of the actuator 303. It may be that the tag disabler 303b is to cause disabling of the anti-theft functionality of the tag in response to actuation of the actuator 303. It may be that the tag unlocker 303c is to cause unlocking of the anti-theft tag 106 for removal from the article 104 in response to actuation of the actuator 303. The actuation of the actuator 303 based on the positive authentication of the article 104 may cause the remover 303a and/or disabler 303b and/or unlocker 303c to become active and therefore capable of applying force or applying e.g. magnetic or electromagnetic fields (e.g. by way of an electromagnet or by a permanent or static magnet).

The processing circuitry 102 may be to automatically cause removal of the anti-theft tag 106 from the article 104 or unlocking of the anti-theft tag 106 for removal from the article 104, or disable the anti-theft functionality of the tag 106 based on (e.g. in response to) a positive authentication of the article 104 by the processing circuitry 102, for example without the user having to touch the device 100. For example, the processing circuitry 102 may be to automatically actuate the actuator 303 based on (e.g. in response to) a positive authentication of the article 104 by the processing circuitry 102, for example for a predetermined time period, to thereby enable the device 100 to remove, unlock or disable the anti-theft functionality of the tag without the user having to touch the device 100. This helps to improve hygiene by reduced contact of users with surfaces. Thus, in some example implementations, the actuator 303 may be actuated based on (e.g. in response to) the positive authentication of the article 104 for the predetermined period of time (e.g. automatically, based on positive authentication of the article).

The predetermined period of time may be set on the device 100 at a point of manufacture, or the predetermined period of time may be updatable. In the latter case, the predetermined period of time may be communicated to the device 100, for example by an external device (e.g. a networked server).

In some example, implementations, it may be that the actuation of the actuator 303 times out after expiry of the predetermined period of time, and the determination of the timeout may be based on an obtained clock signal (e.g. from clock 518) by either the processing circuitry 102 or the actuator 303. In some examples, it may be that the processing circuitry 102 is to cause the anti-theft functionality of the tag 106 to be disabled by (e.g. automatically, e.g. in response to positive authentication of the article) providing an indication (such as to a security system or server thereof, such as a security system which is to detect the anti-theft tag 106 and determine whether to trigger an alarm or alert in response to the detection of the tag 106, for example based on a detected identifier of the tag 106 and a data structure such as a database, the data structure storing tag identifiers for triggering the alarm or alert) that the detection of the tag is not to provide a further response by the security system, for example not to cause an alarm (e.g. a theft alert) to be provided or triggered based on a detection of the tag. For example, it may be that processing circuitry may update a stored variable or operator associated with the article (e.g. stored locally or externally, such as on a server networked to the device 100), in response to a positive authentication of the article, to indicate that an alarm (e.g. theft alert) is not to be provided in response to a detection of the tag, for example, at an exit point to a premises or during a security check.

It may be that the processing circuitry 102 is, depending on a positive authentication of the article 104, to provide an indication to the user of the authenticated article 104. For example, the indication may comprise a perceptible identification of the article 104. The perceptible identification may be based on, for example, (e.g. product name) information provided in the permission data. Additionally or alternatively, the perceptible identification may be based on information retrieved from a server by way of a network connection. For example, the (e.g. processing circuitry 102 of) device 100 may be to retrieve from the server and to provide a perceptible indication of any one or more of: pictorial information (e.g. a photograph) relating to the article, text description of the article. It may be that the device 100 is to sense (e.g. by way of network connection 108) whether access to a network (e.g. the Internet) is available and, depending on sensing that access to the network is available, the (e.g. processing circuitry 102 of the) device 100 may be to retrieve said information from the server and provide a perceptible indication thereof.

The perceptible indication may be a visual or audible prompt to present the authenticated article 104 in the vicinity of the tag remover 303a, the tag disabler 303b or the tag unlocker 303c for tag removal, disabling or unlocking. Additionally or alternatively, the indication may help to prevent mistaken or fraudulent tag removal, disabling or unlocking by the device 100 (e.g. removal, unlocking or disabling of a tag of an article which has not been authenticated by the processing circuitry 102, such as an article which is not identified by the permission data) by indicating (e.g. identifying) to the user, and in some cases to a (e.g. security) staff member of a store or collection point (or other authorised party), the article 104 which has been authenticated for tag removal, unlocking or disabling. Indicating (e.g. identifying) the article 104 which has been authenticated for tag removal, unlocking or disabling in a perceptible way may deter a user (e.g. customer) from mistakenly or fraudulently removing, unlocking or disabling a tag on an unauthenticated article. It may be that the article presented for tag removal, unlocking or disabling at the device can be unofficially verified against the authenticated article by the authorised party (e.g. security staff), who may be able to perceive the indication provided by the device.

It may be that the device provides the perceptible indication (e.g. identification) of the article before, during, or before and during removal, unlocking or disabling of the tag. It may be that the device provides a visual or audio indication (e.g. identification) of the authenticated article. For example, it may be that the device 100 may further optionally comprise a speaker or a display screen (not shown) for indicating (e.g. identifying) the authenticated article.

In some implementations, it may be that device 100 may comprise a display screen to display an image of the authenticated article in response to the positive authentication of the article by the processing circuitry 102.

Although the identifier 105 of the article 104 is described above as comprising an identifier such as a product code (or an encoded identifier) identifying the article, it will be understood that in some examples the identifier 105 of the article 104 may be further processed by the interface 101 or processing circuitry 102 to identify the article. For example, the identifier 105 may comprise a pointer or a location from which to retrieve a direct identifier (e.g. a product code) of the article. For example, the identifier may comprise an instruction, or a location, such as in a memory or server, that may be usable by the processing circuitry 102 of the device 100 to obtain a product code of the article from an external source. For example, the identifier may comprise a pointer that points the processing circuitry to a location within a local or remote database in which a product code for the article may be stored. In some example implementations, the database may be accessed through a network and the device 100 may be connectable to the network via the network connection 108. Alternatively, the database may be stored locally on the device 100, such as in a memory (e.g. Random-Access Memory, RAM, or Read-Only Memory, ROM).

It will also be understood that the permission data 107 may comprise a pointer or a location at which to obtain information relating to a purchase or order to which the permission data 107 relates, such as any one or more of the second identifier 209 of the article 104, the quantity 311 of articles having the second identifier permitted for taking away, time data 515, the purchase or order identifier, permission event data. For example, the information relating to the purchase or order may be stored on an external server and may be accessed over the network via the network connection 108. For example, the pointer may point the processing circuitry 102 to a location within a local or remote data storage structure (such as a database) in which the information relating to the purchase or order may be stored. In some example implementations, the data structure may be accessed through a network and the device 100 may be connectable to the network via the network connection 108. Alternatively, the database may be stored locally on the device 100, such as in a memory (e.g. Random-Access Memory, RAM, or Read-Only Memory, ROM).

In some example implementations, the interface 101 may be configured to continually scan or seek a presented identifier 105. Alternatively, the interface 101 may be placed in an idle mode and may be configured to enter a higher operational mode (i.e. an operational mode with higher power consumption and higher functionality) for obtaining the identifier 105. For example, the interface 101 may be triggered to enter the higher operational mode based on sensor input. In some example implementations, the device 100 may comprise a sensor (not shown) such as a motion sensor or light sensor to detect the presence of a user or article in the vicinity of the device. It may be that actuation of the interface 101 is triggered based on a detection by the sensor. Alternatively, it may be that the device 100 comprises clocking circuitry to obtain (i.e. receive or generate) a clocking signal and actuation of the interface 101 may be triggered periodically or intermittently based on the clocking signal.

In some example implementations, the device 100 may further comprise a user-prompt interface (not shown) and associated circuitry to prompt a user to present the article 104 (e.g. the identifier 105 of the article 104), in the vicinity of the device 100. Additionally or alternatively, the device 100 may further comprise a user-prompt interface (not shown) and associated circuitry to prompt a user to present the permission data 107 in the vicinity of the device 100. For example, the user prompt interface may display visual prompts to the user or may provide audio prompts to the user. The prompts may be provided continuously, periodically or may be triggered, for example based on a detection of a user in the vicinity of the device 100.

It will also be understood that, in some examples, the permission data 107 may be stored on and transferred to the device 100 from an RFID tag, or a device, such as a user device, which is configured to communicate via a short-range or medium range communication scheme such as Bluetooth or NFC. It may be that if the permission data 107 is to be transmitted by a user device to the device 100, or otherwise received by the device 100 from a user device. As discussed above, the user device may have received permission data 107, based on a permission event such as a purchase or ordering of the article 105. It will be understood that the device 100 may comprise a suitable interface for obtaining the permission data 107.

In some example implementations the permission data 107 may be encoded similarly to the identifier 105 of the article 104. However, the source from which the identifier 105 is obtained may be different from the source from which the permission data 107 is obtained. For example, the identifier 105 may be obtained from a label affixed to the article 104, whereas the permission data 107 may be obtained from a user device or hardcopy printout or a server connected to device 100 via a network.

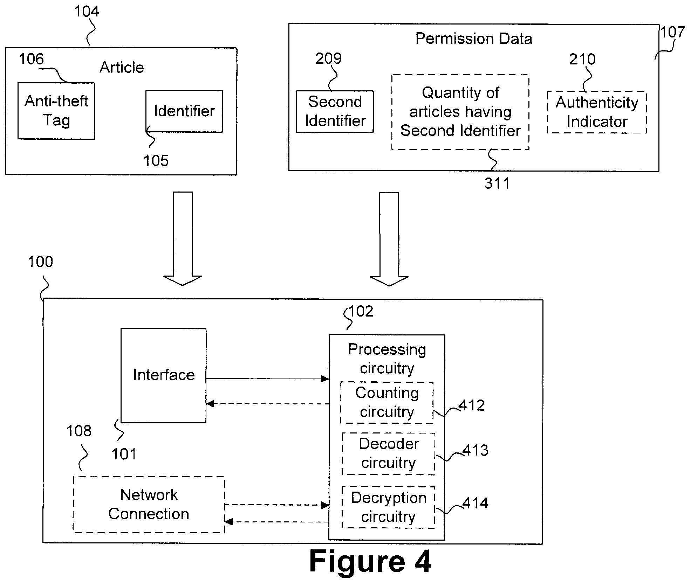

As shown in Fig. 4, in some example implementations, the identifier 105, the permission data 107 or the identifier 105 and the permission data 107, or data included therein (such as the second identifier etc), may be encoded, encrypted or encoded and encrypted. For example, the identifier may be encrypted based on symmetric or asymmetric cryptography schemes or protocols. For example, the permission data 107 may be encrypted based on symmetric or asymmetric cryptography schemes or protocols.

The permission data 107 may encrypted similarly to the identifier 105, or may be provided with a different encryption, for example, using a different encryption scheme or using a different key. For example, the permission data 107 may be provided with higher level of encryption (i.e. a more secure or more computationally intensive level of encryption) with respect to the identifier 105. Encrypting permission data may reduce the risk of positive authentication of an article for tag removal, unlocking or disabling based on fraudulent permission data. For example, it may be that the identifier of the article is not as accessible to a fraudulent user by way of the encryption. A higher level of encryption may be applied to the permission data than the identifier on the basis that it may be used to authenticate more than one article and is therefore of potentially greater value to protect. The decoding and the decryption may thus be common to the identifier 105 and the permission data 107, or data included in the permission data, or may be performed using different coding and/or encryption schemes or keys etc.

It may be that the interface 101 for obtaining the identifier 105 is configured to decode, decrypt or decode and decrypt the obtained identifier. It may be that the interface for obtaining the permission data is configured to decode, decrypt or decode and decrypt the permission data. Alternatively, the processing circuitry 102 may be to decode, decrypt or decode and decrypt the identifier 105, the permission data 107 or the identifier 105 and the permission data 107 or data included there in (e.g. the second identifier 209), for example as part of authenticating the article 104 for tag removal, unlocking or disabling.

It may be that the device 100, or processing circuitry thereof 102, comprises decoding circuitry 413, decryption circuitry 414 or decoding circuitry 413 and decryption circuitry 414 to perform the decryption, decoding or decryption and decoding of the identifier 105 of the article 104 and/or the permission data 107.

It may be that the interface for obtaining the permission data 107 or the processing circuitry 102 is to decode, decrypt or decode and decrypt the permission data 107 (e.g. prior to or during authentication of the article 104) to obtain any one or more of the second identifier 209, the quantity 311 of articles having the second identifier permitted for taking away, the authenticity indicator 210, time data (shown in Fig. 5, 515), the purchase or order identifier, permission event data (shown in Fig. 6, 619).

It may be that the permission data 107 is encrypted and the identifier 105 is not encrypted.

It may be that the device 100 is to provide a first alert (e.g. responsive to a positive authentication of the article 104 by the device 100) to indicate that an article 104 has been positively authenticated for tag removal, unlocking or disabling. For example, a first visual indicator, a first audible indicator or both first visual and first audible indicators may be provided by the device 100 to indicate that the article 104 has been positively authenticated. For example, a (e.g. top) surface of the device may be illuminated with a first colour of light (e.g. with white light), a first audible sound may be output by (e.g. a speaker of) the device 100 or both a (e.g. top) surface of the device 100 may be illuminated with the first colour of light and the first audible sound may be output by the device 100 to indicate that the article 104 has been positively authenticated for tag removal, unlocking or disabling.

It may be that the device 100 is to provide a second alert (e.g. responsive to a negative authentication, or a lack of positive authentication, of the article 104 by the device 100) to indicate that an article 104 has not been positively authenticated for tag removal, unlocking or disabling, the second alert being different from the first alert. For example, a second visual indicator, a second audible indicator or both second visual and second audible indicators may be provided by the device 100 to indicate that the article 104 has not been positively authenticated. The second visual indicator may be different from the first visual indicator. The second audible indicator may be different from the first audible indicator. For example, a (e.g. top) surface of the device may be illuminated with a second colour of light (e.g. red light) different from the first colour of light, a second audible sound may be output by (e.g. a speaker of) the device 100 different from the first audible sound, or both a (e.g. top) surface of the device 100 may be illuminated with the second colour and the second audible sound may be output by the device 100 to indicate that the article 104 has not been positively authenticated for tag removal, unlocking or disabling.

Providing different alerts depending on positive and negative (or lack of positive) article authentications allows staff overseeing tag removal (e.g. from a distance) to be aware of any negative (or lack of positive) authentications and take appropriate action (e.g. customer assistance).

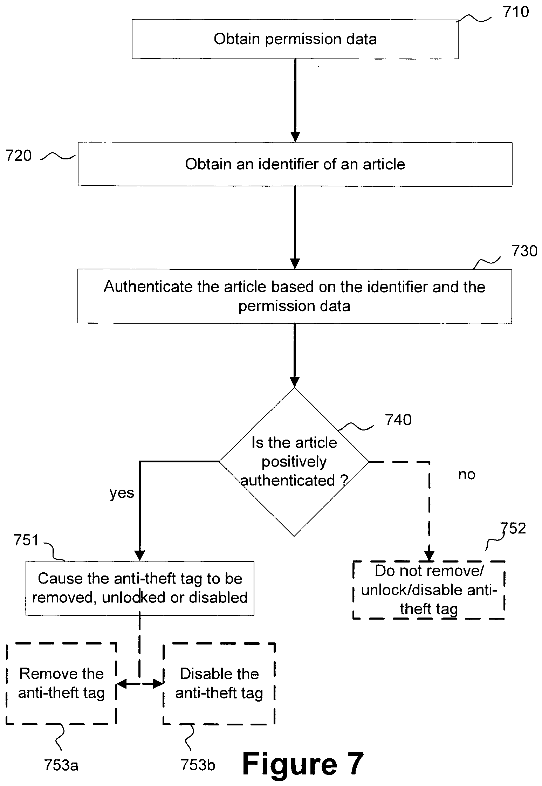

Fig. 7 is a flowchart schematically illustrating an example method for removing an anti-theft tag from an article, unlocking an anti-theft tag for removal from an article, or disabling the anti-theft functionality of an anti-theft tag of an article, such as anti-theft tag 106 of article 104. The method may be performed by a device, such as device 100.

At process element 710 the method may comprise obtaining permission data relating to a permission to take away an article (e.g. to take away the article from a premises in which the article is currently residing). As described above with respect to Fig. 2, the permission data may be associated with a purchase or ordering of the article, but is not so limited. The method may comprise (e.g. the device 100) obtaining permission data by way of an interface. Alternatively, the method may comprise (e.g. the device 100) obtaining the permission data from a network (e.g. a network to which the device 100 is connected).

At process element 720 the method may comprise obtaining an identifier of the article 104. As described with reference to Fig. 2 above, the identifier may be obtained by an interface of the device. It will be understood that process elements 710, 720 may be performed sequentially in any order or (e.g. substantially) concurrently. In some examples, the device 100 may issue a prompt to a user to cause performance of process elements 710, 720 in any order or (e.g. substantially) concurrently.

At process element 730 the method may comprise authenticating the article (i.e. authenticated for tag removal, unlocking or for disabling the anti-theft functionality of the tag) based on the identifier and the permission data. In some example implementations, the method may comprise authenticating the article by comparing the identifier and the permission data. It may be that authenticating the article further comprises authenticating the permission data. For example, it may be that the method comprises verifying an authenticity indicator (e.g. a digital signature) of the permission data to thereby authenticate the permission data. This helps to prevent fraudulent permission data from being used to fraudulently remove, unlock or disable anti-theft tags from articles.

At process element 740 the method may continue to process element 751 depending on a positive authentication of the article. Alternatively, the method may end or continue to process element 752.

At process element 751, depending on a positive authentication of the article, the method may comprise (e.g. processing circuitry 102 of the device) causing the removal of the tag, causing unlocking of the tag for removal from the article, or causing the anti-theft functionality of the tag to be disabled. For example, at process element 753a, the method may comprise removing the anti-theft tag 106 from the article, for example by way of the automatic operation of an anti-theft tag remover, for example by actuation of an actuator, for example when the anti-theft tag 106 is presented to the anti-theft tag remover. Alternatively, process element 753a may comprise unlocking the anti-theft tag 106 for removal from the article (e.g. by the user), for example by way of the automatic operation of an anti-theft tag unlocker, for example by actuation of an actuator, for example when the anti-theft tag 106 is presented to the anti-theft tag unlocker. Alternatively, at process element 753b, the anti-theft functionality of the tag may be disabled, for example by way of automatic operation of an anti-theft functionality disabler (for example when the anti-theft tag 106 is presented to the anti-theft tag remover), or by way of providing an indication (e.g. to a security system or a server thereof, e.g. of a supplier or seller, the security system being to detect the anti-theft tag 106 and determine whether to trigger an alarm or alert in response to the detection of the tag 106, for example based on a detected identifier of the tag 106 and a data structure such as a database, the data structure storing tag identifiers for triggering the alarm or alert) not to cause an alarm (e.g. a theft alert) in response to detection of the tag. For example, the anti-theft functionality disabler may be operated via actuation of an actuator.

At process element 752, based on a negative authentication of the article, or a lack of a positive authentication of the article, the method may comprise not causing the tag to be removed, unlocked or disabled. For example, the method may comprise (e.g. processing circuitry 102 of device 100) refraining from actuating an actuator.

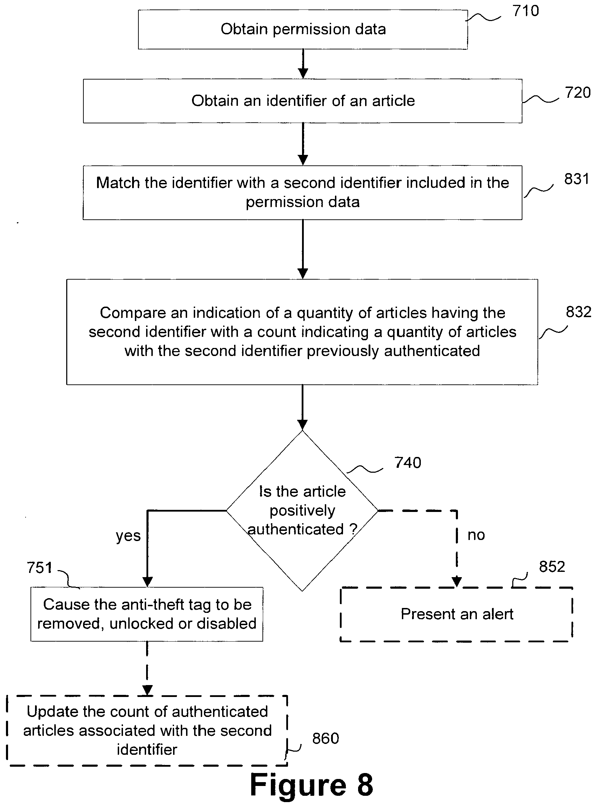

In an example implementation schematically illustrated by the flowchart of Fig. 8 a method of authenticating an article for anti-theft tag removal or unlocking or for disabling of anti-theft functionality of an anti-theft tag of the article may be further based on a comparison of a count of articles having an identifier which have been previously (positively) authenticated based on obtained permission data and an indication of a quantity of articles having the second identifier permitted to be taken away (e.g. the indication of said quantity being provided by the permission data).

The method of Fig. 8 may comprise process elements 710 and 720 as set out above in respect of Fig. 7. In this case, the permission data obtained in process element 710 may include a second identifier of the article whose identifier is obtained in process element 720 and may further include an indication of a quantity of articles having the second identifier which are permitted to be taken away by the permission data.

At process element 831, the method may comprise authenticating the article based on the identifier and the permission data, for example by comparing the identifier obtained in process element 720 (i.e. the first identifier) with the permission data obtained in process element 710, for example by comparing the first identifier with the second identifier. In some example implementations, it may be that the first identifier and the second identifier may be matched to thereby positively authenticate the article for tag removal or unlocking or for disabling the anti-theft functionality of the tag of the article. It will be understood that, in other example implementations, process element 831 may be omitted or substituted for another process element for authenticating the article based on the identifier and the permission data.

At process element 832 the method may comprise authenticating the article by further comparing the indication of the quantity of articles having the second identifier which is permitted to be taken away with a count indicating a quantity of articles with the second identifier having previously been authenticated based on the obtained permission data.

It may be that authenticating the article comprises the combination of process elements 831 and 832, and in some examples also authentication of the permission data (i.e. by verifying an authentication indicator of the permission data). For example, it may be that the method comprises positively authenticating the article depending on the comparison of the first and second identifiers matching each other and on the count being less than the indicated quantity of articles permitted to be taken away. It may be that the article is positively authenticated depending on the permission data being positively verified (e.g. based on an authentication indicator thereof). It may be that if the first and second identifiers do not match, the count is equal to or exceeds the quantity of articles having the second identifier which are permitted to be taken away, or the permission data is not positively verified (e.g. based on an authentication indicator thereof or a lack of authentication indicator), the article may not be positively authenticated.

By the comparison of the quantity provided in the permission data and the count to further authenticate the article for tag removal, unlocking or disabling, it can be better ensured that permission data is not fraudulently re-used to remove, unlock or disable tags from articles having identifier. This is particularly (but not exclusively) useful when the device 100 is not connected to the network (or is not to rely on a network connection), and so cannot (or is not to) communicate with a central source (e.g. external server) in order to determine prior use or exhaustion of the permission data.

At process element 740 the method may continue to process element 751 depending on a positive authentication of the article. Alternatively, the method may end or continue to process element 852. Process element 751 may be as described above in respect of Fig. 7.

It may be that at process element 860, which may be performed after process element 751, or between process element 740 and process element 751, the count of articles having the second identifier previously authenticated based on the permission data may be updated, for example, the count value may be incremented or decremented e.g. by a value of one.

It may be that at process element 852, an alert may be presented or provided (e.g. by the device 100). For example, the device may provide a visual or audio alert that an article presented for anti-theft tag removal, unlocking or tag disabling is not authenticated.

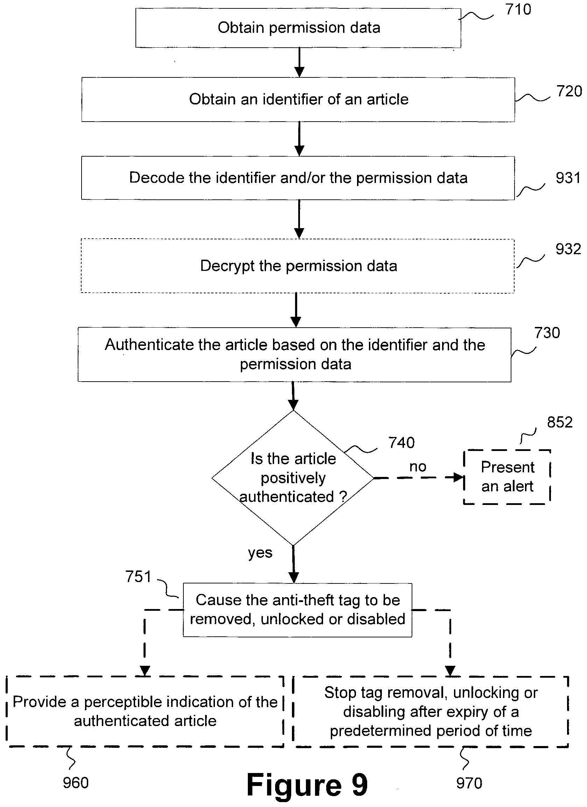

In an example implementation schematically illustrated by the flowchart of Fig. 9 a method of authenticating an article may further comprise decoding an obtained encoded identifier and/or an obtained encoded permission data.

The method of Fig. 9 may comprise process elements 710 and 720, which may be the same as process elements 710, 720 described above in respect of Fig. 7 and Fig. 8.

It may be that at process element 931 the method comprises (e.g. the interface 101 or processing circuitry 102 of device 100) decoding the obtained identifier. Process element 931 may additionally or alternatively comprise decoding the obtained permission data. It may be that data included in the permission data, such as any one or more of the second identifier, the authenticity indicator, the indication of the quantity of articles having the second identifier which are permitted to be taken away, may be additionally, individually decoded.

It may be that at process element 932 the method additionally or alternatively comprises decrypting the permission data (or individual data included in the permission data as discussed above), which may have been encrypted.

The method of Fig. 9 may further comprise process elements 730, 740, 852, 751 which may be as discussed above in respect of Fig. 8. It may be that at process element 960 the method comprises (e.g. the device 100) providing a perceptible indication (e.g. identification) of the article authenticated for anti-theft tag removal or unlocking or for disabling of the anti-theft functionality of the tag. Although process element 960 is shown in Fig. 9 after process element 751, it will be understood that process element 960 may alternatively be provided between process elements 740, 751 or in parallel with process element 751.

As discussed above, it may be that at process element 751, the method comprises (e.g. the processing circuitry 102 of the device 100) causing the tag to be removed from the article, or causing the tag to be unlocked for removal from the article, or causing the anti-theft functionality of the tag to be disabled depending on a positive authentication of the article. For example, the method may comprise (e.g. the processing circuitry 102) automatically actuating an actuator for a predetermined period of time based on (e.g. in response to) positive authentication of the article to thereby cause the tag to be removed, unlocked or disabled. At process element 970, after expiry of the predetermined period of time, it may be that the actuator is de-actuated, e.g. by removing the active actuation of the actuator.

In some examples, it may be that the method comprises at process element 751 (e.g. processing circuitry 102 of device 100) disabling the anti-theft functionality of the tag by providing an indication (e.g. to a security system or server thereof) to thereby prevent an alarm (e.g. theft alert) being provided in response to detection of the tag (e.g. by the security system). In this case, process element 970 may be omitted.

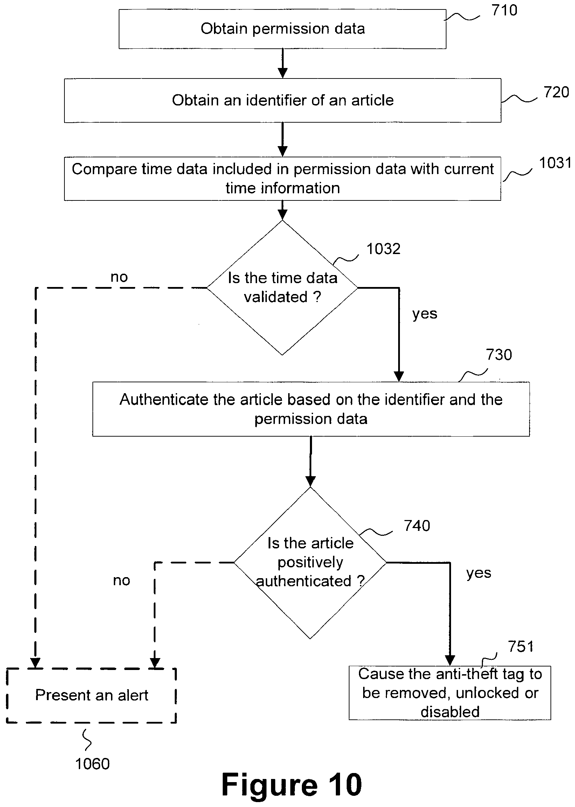

In an example implementation schematically illustrated by the flowchart of Fig. 10 a method of authenticating an article for tag removal or unlocking or for disabling the anti-theft functionality of the tag may further comprise verifying time data of the permission data with current time information. By performing the timing validation based on time data and current time information, it can be better ensured that the permission data is not re-used with the device 100 (or with a similar device) to mistakenly or fraudulently perform tag removal or unlocking or disabling on another article which a user (e.g. customer) does not have permission to take away. This is particularly (but not exclusively) useful where the device 100 is not connected to the network (or is not to rely on a network connection) and so may not be able to tell (or is not to tell) from a central source (e.g. a server) if the permission data 107 has been previously used to authenticate an article for tag removal, unlocking or disabling.

The method of Fig. 10 may comprise process elements 710 and 720 which may be as above with respect to Figs. 7-9. It may be that the method comprises at process element 1031 authenticating the article further based on comparing time data included in the obtained (and optionally decoded and decrypted) permission data to current time data to thereby validate the time data.

It may be that at process element 1032 the method may continue to process element 730 depending on a positive validation of the time data. The method may comprise positively validating the time data depending on the current time being within a time period or expiry time indicated by the time data, e.g. a time period defined with reference to a purchase time of the article. It may be that, based on a negative validation of the time data (i.e. the time data is not positively validated), the method may end or continue to process element 1060 where an alert may be presented by the device to indicate that the article (by way of the unvalidated permission data) is not authenticated for anti-theft tag removal, unlocking or disabling.

It may be that the method of Fig. 10 further comprises process elements 730, 740, 831 which may be as above in respect of Figs. 7-9.

It may be that the validation of the time data is performed concurrently with, or subsequent to process elements 730, 740, 831 (it will be understood that although process element 831 is not explicitly shown in Fig. 10, process element 831 may be part of process element 730 in this case). For example, it may be that the validation of the time data is not a pre-requisite for further authenticating the article. It will be understood that the decoding, decrypting or decoding and decrypting process elements 931, 932 may also form part of the method of Fig. 10.

It may be that at process element 751 the method comprises causing (e.g. by the processing circuity 102 of device 100) the removal of the anti-theft tag, unlocking of the anti-theft tag for removal from the article, or disabling the anti-theft functionality of the tag, for example by actuating an actuator to cause the removal of the anti-theft tag or disable the anti-theft functionality of the tag. It may be that the causing of the removal or unlocking of the anti-theft tag or disabling the anti-theft functionality of the tag based on the positive authentication of the article by the processing circuitry is automatic. Alternatively, the tag may be disabled by providing an indication to a server for a security system not to react when the tag is detected by the security system. It may be that at process element 751 the anti-theft functionality of the tag is disabled, for example by providing an indication to (e.g. a server of) the security system to refrain from providing an alarm in response to detection of the tag.

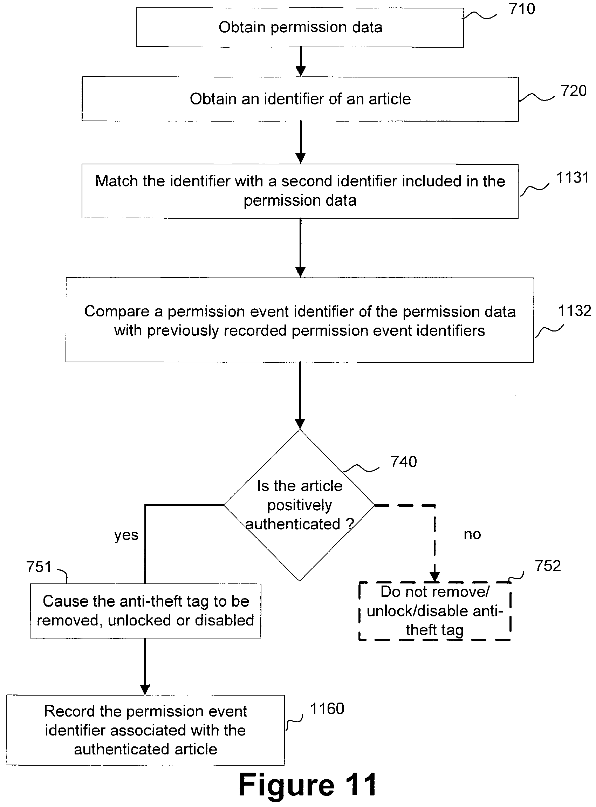

In an example implementation schematically illustrated by the flowchart of Fig. 11 a method of authenticating the article may further comprise comparing a permission event identifier (such as a purchase or order event identifier or a collection event identifier) with previously recorded permission event identifiers associated with previously authenticated articles. It may be that to inhibit fraudulent re-use of permission data, such as the permission data being re-used to authenticate articles to which the permission to take away was not granted (i.e. articles sharing the same identifiers as the permitted articles but in addition to the permitted articles, for example if a receipt of purchase is re-used to remove, unlock or disable the tags of a second set of non-purchased but identical articles) a permission event identifier is implemented to limit the use of the permission data.

The method of claim 11 may comprise process elements 710, 720 which may be as above with respect to Figs. 7-10. It may be that at process element 1131 the method comprises comparing the identifier to the permission data, for example the identifier (first identifier) may be compared with a second identifier of the permission data in the same way as in process element 831 of Fig. 8. It will be understood that, in other example implementations, process element 1131 may be omitted or substituted for another process element for authenticating the article based on the identifier and the permission data.

It may be that at process element 1132, the method comprises comparing a permission event identifier included in the permission data with previously recorded permission event identifiers associated with previously authenticated articles (i.e. where the previous authentication of the articles has been based on the permission data comprising respective permission event identifiers). It may be that the permission event identifiers are unique to each set of permission data used to authenticate articles for tag removal, unlocking or disabling. It may be that the method comprises matching the permission event identifier from the obtained permission data to the previously recorded permission event identifiers. It may be that the method comprises not authenticating the article based on the permission event identifier being matched to a previously recorded permission event identifier. It may be that method comprises authenticating the article if the permission event identifier is not matched to a previously recorded permission event identifier and if the article is otherwise authenticated, for example, based on a comparison of the first identifier and the second identifier.

Process elements 740, 751 and 752 may be as above in respect of Figs. 7-10. It will be understood that the decoding, decrypting or decoding and decrypting process elements 931, 932 may also form part of the method of Fig. 11.

It may be that at process element 1160, which may be performed depending on completion of process element 751 or on positive authentication of the article in process element 740, the method may comprise recording or causing recordal of data based on the permission event identifier of the permission data associated with the currently authenticated article (i.e. the permission data obtained in process element 710). It may be that this data based on the permission event identifier is recorded for comparison to permission event identifiers of permission data that will be presented to the device in the future, for example to inhibit use of the permission data to (e.g. mistakenly or fraudulently) authenticate further articles for tag removal, unlocking or disabling based on the permission data.

Any of the process elements described above with reference to Figs. 7 to 11 may be performed by circuitry on the device 100, or on e.g. a remote server connected to the device via a network connection 108. Thus, the methods described above may be performed solely by the processing device or jointly between the device and a network including additional network components, such as a server or a plurality of servers. In the example implementations where at least one process element for authenticating the article is performed by a networked server (or servers), the results of the processing elements may be received by the device 100, for example, the device 100 may receive a combination of outcomes or determinations of intermediate process elements or may receive individual intermediate process element outcomes or determinations and the processing circuitry 102 may authenticate the article based on the received outcomes or determinations.

Furthermore, it will be understood that any of the individual processing elements or any combinations of processing elements in Figs. 7 to 11 may be combined with each other jointly or severally. It will also be understood that one or more processing elements may be removed from the methods of Figs. 7 to 11 where appropriate.

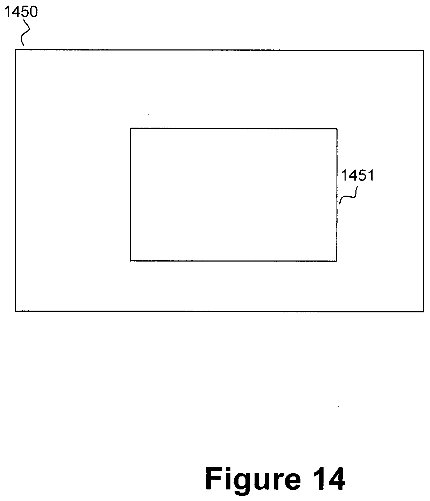

The methods illustrated in the flowcharts of Figs. 7 to 11 may be computer-implemented methods. In some example implementations, the processing elements of Figs. 7 to 11 may be caused by machine readable instructions executed by processing circuitry to cause the processing circuitry to perform the process elements. The machine-readable instructions may be executed by one or more than one processing circuits. Where a plurality of processing circuits is used, it may be that the processing circuits are communicatively coupled, e.g. over a network. As shown in Fig. 14, the machine readable instructions 1451 may be provided on one or more non-transitory machine readable media 1450.

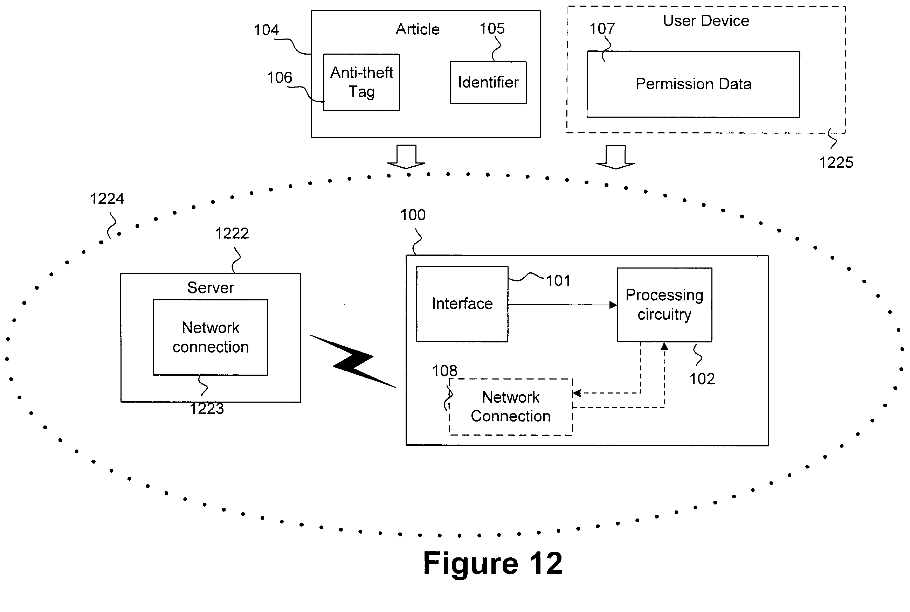

Fig. 12 is an illustrative example implementation of a system including the device 100. The system may further comprise the article 104 having the identifier 105 and the anti-theft tag 106. The system may further comprise permission data 107, which may optionally be stored on a user device 1225. The user device 1225 may be presented to the device 100, such that the permission data 107 of the user device 1225 is presented in the vicinity of the device 100, for example in the vicinity of an interface of the device 100, such as interface 101. Alternatively, the permission data 107 may not be stored on a user device but may be otherwise presentable to the device 100 (e.g. by way of a hardcopy printout).

The system of Fig. 12 may further comprise a network 1224 over which device 100 and a server 1222 are connected via respective network connections. For example, server 1222 may comprise network connection 1223, which may connect server 1222 to device 100 over network 1224 by way of the network connection 108 of device 100. At least part of the authentication of the article for anti-theft tag removal, unlocking or disabling may be performed by the server 1222 and received by the device 100. For example, any of the process elements 720-730, 820-832, 920-933, 1020-1033 or 1120-1132 may be performed at least in part by the server 1222. Additionally or alternatively, additional data relating to the article 104, such as any one or more of pictures or photographs or the article, extended product specifications, details or descriptions, may be provided by the server 1222 to the device 100 over the network 1224.

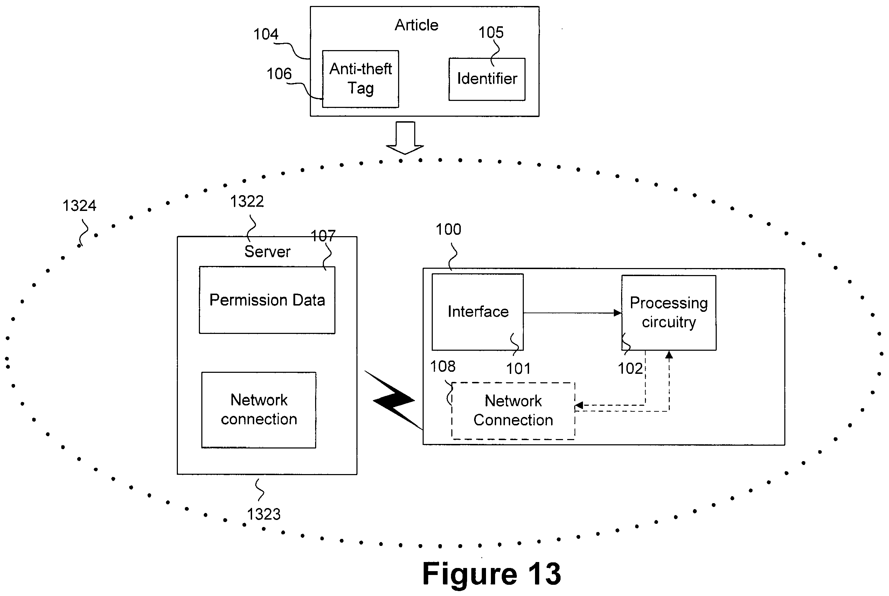

Fig. 13 is an illustrative example implementation of a system including the device 100. The system may further comprise the article 104 having the identifier 105 and the anti-theft tag 106.

The system may further comprise a network 1324 over which device 100 and a server 1322 are connected via respective network connections. For example, server 1322 may comprise network connection 1323, which may connect server 1322 to device 100 over network 1324 via the network connection 1308 of device 100. As described above with reference to Fig. 12, at least part of the authentication of the article for anti-theft tag removal, unlocking or disabling may be performed by the server 1322 and received by the device 100. For example, any of the process elements 720-730, 820-832, 920-933, 1020-1033 or 1120-1132 may be performed at least in part by the server 1322.

Additionally, the server 1322 may further comprise the permission data 107. For example, the permission data may be stored on or retrievable from the server 1322. In some example implementations, data relating to the permission data may be obtained by the server. For example, any one or more of: the second identifier, the time data, the indication of a quantity of articles associated with the second identifier, the purchase or order identifier, the permission event identifier may be stored on the server 1322 or may be obtained by the server 1322 e.g. from another networked device, such as networked storage, based on the permission data. The server 1322 may be to provide any one or more of the following to the device 100: : the second identifier, the time data, the indication of a quantity of articles associated with the second identifier, the purchase or order identifier, the permission event identifier.

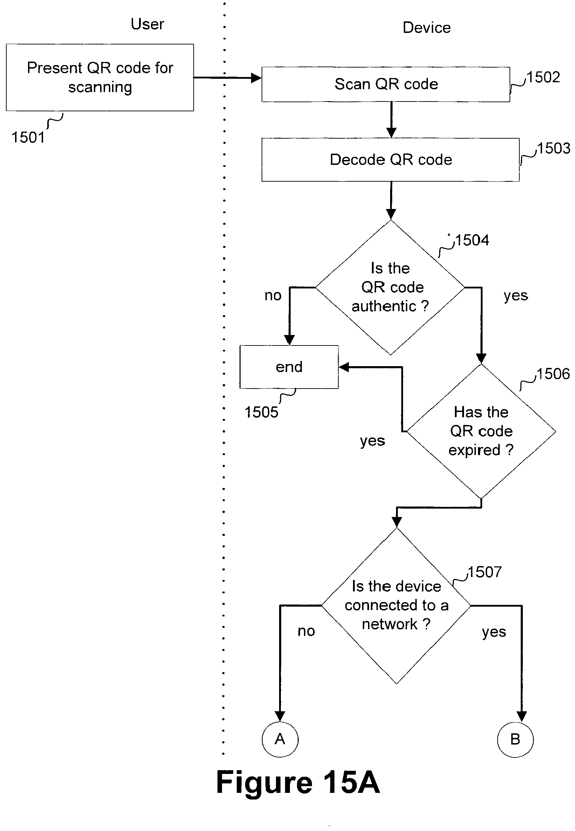

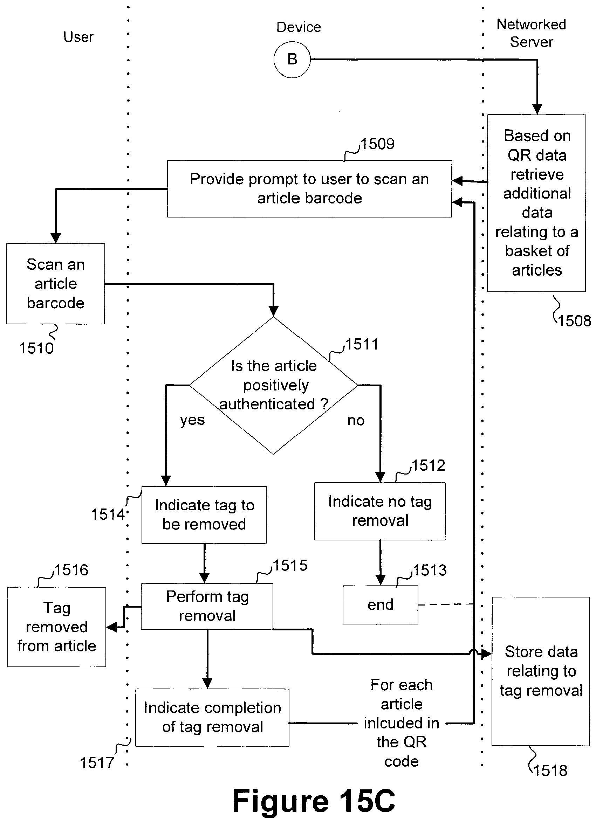

By way of illustrative example, Figs. 15A-C are flow diagrams indicating an example use of an example implementation of the device 100 by a user. The example implementation of device 100 of Figs. 15A-C may or may not have an active connection to a network (e.g. the Internet) by way of network connection 108. Actions by the user, the device 100 and (in respect of Fig. 15C) the networked server are separated into dedicated columns for the user, the device 100 and (in respect of Fig. 15C for a server connected to the device by a network connection).

At process element 1501 of Fig. 15A, a user may present permission data encoded in a QR code (e.g. by hardcopy or on a screen of a user device) in the vicinity of an interface of the device 100. The interface may comprise a QR reader. The device 100 may be provided (e.g. wall or table mounted) in a premises (e.g. store or collection point) from which an article 104 ordered or purchased by the user is to be taken away (e.g. out of the store or collection point) by the user. The QR code may have been provided to the user by an electronic (e.g. online) purchasing system, such as a mobile payments system, e.g. prior to the user presenting the permission data in the vicinity of the device 100.

At process element 1502, the device 100 may detect (e.g. scan) the QR code. At process element 1503, the QR reader may decode the detected QR code, or pass the detected QR code to the processing circuitry 102 for the processing circuitry 102 to decode, to thereby provide decoded permission data. The decoded permission data may include an authenticity identifier such as a digital signature. At process element 1504, the processing circuitry 102 of the device 100 may determine whether the QR code is authentic based on the authenticity identifier. If the QR code is not authentic, the process of Figs. 15A-C may end at process element 1505, which may include presenting an alert on a display of the device indicating that the QR code is not authentic. If the QR code is determined to be authentic, the process may continue to process element 1506.

The decoded permission data may further include time data associated with permission to take away the article, such as time data indicating a time (e.g. date, time of day or date and time of day) of a purchase or order transaction relating to the article 104, or a time at which the permission data 107 is to expire (i.e. a date, time of day or date and time of day beyond which the permission data is no longer valid for use in tag removal, unlocking or disabling). At process element 1506, the processing circuitry 102 of the device 100 may be to determine whether the QR code has expired based on the time data. If the QR code has expired, the process of Figs. 15A-C may end at process element 1505, which may include presenting an alert on a display of the device indicating that the QR code has expired. If the QR code is determined to have not expired, the process may continue to process element 1507.

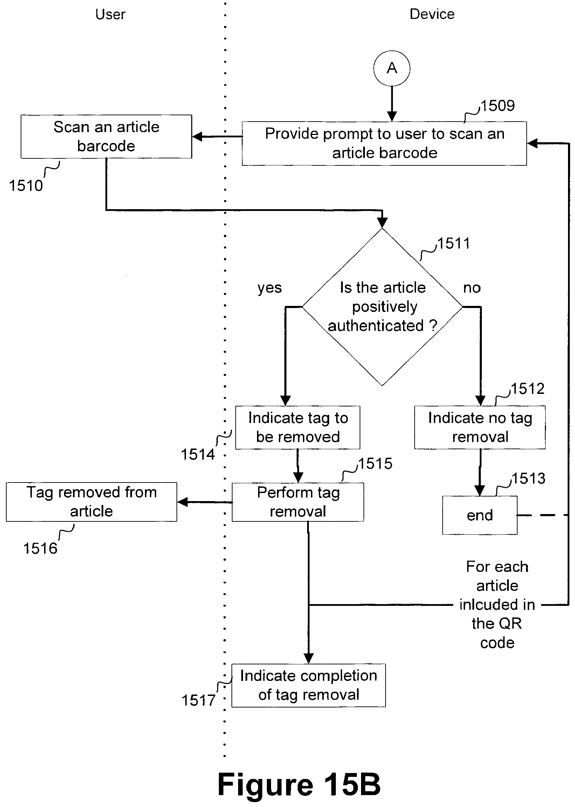

At process element 1507, the device 100 (e.g. processing circuitry 102 and network connection 108) may sense whether the device 100 has an active connection to a network such as the Internet. If the device 100 does not sense an active network connection, the process may proceed to process A which is described below with reference to Fig. 15B. If the device 100 senses an active network connection, the process may proceed to process B which is described below with reference to Fig. 15C.

Referring now to Fig. 15B, it may be that the decoded permission data obtained from the QR code presented to the interface 101 in process element 1501 comprises an identifier of the article 104. At process element 1509, the processing circuitry 102 of the device 100 may provide a prompt to a user on a user interface of the device, such as a display screen, to scan an article barcode. The decoded permission data may comprise text including a product name of one or more articles which the user has permission to take away (and to remove the anti-theft tag therefrom, unlock the anti-theft tag for removal therefrom, or to disable the anti-theft functionality of an anti-theft tag thereof). In this case, the prompt may provide a perceptible identification of the article. For example, the prompt may comprise text including the name of the article displayed on the display screen of the device 100.

At process element 1510, the user may present an identifier 105 of the article 104 to the device. The identifier 105 may be encoded in a barcode. The identifier 105 may be presented by the user in the vicinity of an interface 101 of the device 100. The interface 101 may comprise a barcode reader. The interface 101 may decode the barcode, or the interface 101 may pass the barcode to the processing circuitry 102 which may decode the barcode to provide decoded identification data.

At process element 1511, the processing circuitry 102 of the device 100 may authenticate the article 104 depending on the decoded permission data and the decoded identification data. For example, each of the decoded identification data and the decoded permission data may comprise a product code of the article 104. The processing circuitry 102 may compare the product codes of the decoded identification data and the decoded permission data. If the product codes match each other, the article 104 may be positively authenticated.

It the product codes do not match each other, the article 104 may not be positively authenticated (e.g. may be negatively authenticated). If the article 104 is negatively authenticated, the process may continue to process element 1512 which may comprise the processing circuitry 102 outputting an indication (e.g. to the display screen of the device 100) that the tag is not to be removed (or unlocked or disabled) and the process may end at process element 1513 for the specific article 104. If the article 104 is positively authenticated at process element 1511, the process may continue to process element 1514 which may involve the processing circuitry 102 outputting an indication (e.g. to the display screen of the device 100) that the tag 106 is to be removed. The indication may comprise a perceptible identification of the article 104, such as the text including the name of the article obtained from the decoded permission data.

In response to a positive authentication of the article at process element 1511, an actuator of a tag remover may be actuated automatically for a predetermined period of time. During that predetermined period of time, the user may present the anti-theft tag of the article 104 to the actuated tag remover which may perform tag removal. The processing circuitry 102 may check based on the permission data (and, for example, on data stored locally on the device 100 relating to any articles which have already had their tags removed based on the detected QR code) whether the article 104 is the last article which the user has permission to take away (and therefore to remove the tag therefrom). If the article 104 is the last article which the user has permission to take away, the process may continue to process element 1517 which may provide an indication (e.g. on a display screen of the device 100) that tag removal of the article(s) associated with the permission data is complete. If the article 104 is not the last article which the user has permission to take away, the process may return to process element 1509.

Referring now to Fig. 15C, which may be performed if the device 100 sensed a network connection at process element 1507 of Fig. 15A, at process element 1508 the device 100 (e.g. the processing circuitry 102) may retrieve data relating to the article 104, or data relating to a virtual basket of one or more articles (including article 104), from a networked server based on the detected QR code. For example, the device 100 may obtain an order or purchase number from decoded permission data obtained from the QR code and retrieve data relating to the article or virtual basket associated with the purchase or order number from a networked server. The data relating to the article 104 or virtual basket (where provided) may, for example, comprise any one or more of pictures (e.g. photographs) of the article 104 or articles of the virtual basket which the user has permission to take away, textual descriptions of the article 104 or articles of the virtual basket which the user has permission to take away.

The device 100 (e.g. the processing circuitry 102) may perform process elements 1509-1517 as described above in respect of Fig. 15B. However, at process element 1509, the device 100 may output a perceptible identification of the article 104 based on the data retrieved from the server. For example the device 100 may output any one or more of a photograph of the article retrieved from the server, a textual description of the article retrieved from the server.

Process element 1518 may additionally be performed depending on a positive authentication of the article at process element 1511, for example in parallel with or after process element 1515 where the tag may be removed from the article. At process element 1518, the processing circuitry 102 may be to cause data relating to the article 104 from which the tag is to be removed (or is being or has been removed) to be stored by the server. For example, the identifier of the article 104 may be stored, or a count relating to how many of the articles 104 having a particular identifier have had their tags removed based on the permission data 107 may be incremented or decremented. As discussed above, this information may be used by the device 100 or the server to determine whether the permission data has been previously used (e.g. as part of the authentication of further articles for tag removal or disabling) to help prevent mistaken or fraudulent re-use of the permission data (e.g. QR code).

It will be understood that the example of Figs. 15A-15C may be adapted in accordance with any of the functionality (such as any of the functionality of any of the examples of device 100 or any of the functionality of any of the examples of anti-theft tags 106) disclosed herein.

The disclosure also extends to the following examples.
Example 1. A device comprising:
   an interface to obtain an identifier of an article, said article having an anti-theft tag;
   processing circuity to:
      obtain permission data relating to a permission to take away the article;
      authenticate the article based on the identifier and the permission data; and
      depending on a positive authentication of the article by the processing circuitry, cause:
         the anti-theft tag to be removed from the article or unlocked for removal from the article (e.g. for removal from the article by a user); or
         the anti-theft functionality of the tag to be disabled.
Example 2. The device of Example 1, wherein authenticating the article further comprises authenticating the permission data.
Example 3. The device of Example 2, wherein authenticating the permission data comprises verifying a digital signature of the permission data.
Example 4. The device of any of Examples 1 to 3, wherein the identifier of the article obtained by the interface is a first identifier of the article and the permission data includes second identifier data relating to a second identifier of the article, and wherein the processing circuitry is to authenticate the article depending on the first identifier and the second identifier data.
Example 5. The device of Examples 4, wherein the processing circuitry is to authenticate the article depending on a comparison of the first identifier and the second identifier data.
Example 6. The device of Example 4 or Example 5, wherein the second identifier data comprises an encrypted second identifier of the article, wherein the processing circuitry is to decrypt the encrypted second identifier to obtain the second identifier and wherein the processing circuitry is to authenticate the article depending on (e.g. a comparison of, e.g. by the processing circuitry) the first identifier and the second identifier.
Example 7. The device of any of Examples 4 to 6 wherein the permission data comprises an indication of a quantity of articles associated with the second identifier data permitted to be taken away, and wherein the processing circuitry is to authenticate the article further depending on the indication of the quantity and a count indicating a quantity of articles associated with the second identifier data previously authenticated based on the permission data.
Example 8. The device of any of the preceding Examples, wherein the interface is to obtain the identifier from outside the device.
Example 9. The device of any of the preceding Examples wherein the identifier is to be provided to the interface by a user.
Example 10. The device of any of the preceding Examples wherein the interface is a contactless interface.
Example 11. The device of any of the preceding Examples, wherein the identifier obtained by the interface comprises encoded identifier data and wherein the authentication of the article by the processing circuitry comprises decoding the encoded identifier data to obtain the identifier data.
Example 12. The device of any of the preceding Examples, wherein the identifier comprises optically encoded identifier data, and wherein authenticating the article comprises decoding the encoded identifier data to obtain the identifier data.
Example 13. The device of any of the preceding Examples, wherein the identifier comprises identifier data which is optically encoded as a barcode or a QR code.
Example 14. The device of any of the preceding Examples, wherein the interface comprises a scanner or a camera.
Example 15. The device of any of the preceding Examples, comprising an interface for obtaining the permission data.
Example 16. The device of Example 15 wherein the interface for obtaining the permission data is to receive the permission data from outside the device.
Example 17. The device of any of the preceding Examples further comprising an interface for detecting the permission data presented in a vicinity of the interface.
Example 18. The device of any of Examples 15 to 17 wherein the permission data is to be provided to the interface by a user.
Example 19. The device of any of Examples 15 to 18, wherein the interface for obtaining the permission data is a contactless interface.
Example 20. The device of any of the preceding Examples, wherein the permission data comprises encoded permission data, and wherein authenticating the article comprises decoding the encoded permission data.
Example 21. The device of Example 20, wherein the permission data comprises optically encoded permission data, and wherein authenticating the article comprises decoding the optically encoded permission data.
Example 22. The device of Example 21, wherein the optically encoded permission data is encoded as a quick response, QR, code, and wherein authenticating the article comprises decoding the permission data optically encoded as a QR code.
Example 23. The device of any of Examples 15 to 22, wherein the interface for obtaining the permission data comprises a scanner or a camera.
Example 24. The device of any of Examples 15 to 23, wherein the interface for obtaining the identifier of the article and the interface for obtaining the permission data are provided by a common interface for detecting the identifier and the permission data.
Example 25. The device of any of the preceding Examples wherein the processing circuitry is to cause the anti-theft tag to be removed from the article, to cause the anti-theft tag to be unlocked for removal from the article, or to cause the anti-theft functionality of the tag to be disabled automatically in response to a positive authentication of the article by the processing circuitry.
Example 26. The device of any of the preceding Examples comprising an actuator, wherein the processing circuitry is to cause the anti-theft tag to be removed from the article or unlocked for removal from the article or the anti-theft functionality of the tag to be disabled by actuating the actuator.
Example 27. The device of Example 26 wherein the processing circuitry is to automatically actuate the actuator in response to a positive authentication of the article by the processing circuitry.
Example 28. The device of Example 27, wherein the processing circuitry is to automatically actuate the actuator for a pre-determined period of time in response to a positive authentication of the article by the processing circuitry.
Example 29. The device of any of the preceding Examples wherein the device comprises a tag remover to remove the anti-theft tag of the article, wherein the processing circuitry is to cause the anti-theft tag to be removed from the article (e.g. automatically) in response to a positive authentication of the article by activating the tag remover, or wherein the device comprises a tag unlocker to unlock the anti-theft tag of the article for removal, wherein the processing circuitry is to cause unlocking of the anti-theft tag for removal from the article (e.g. automatically) in response to a positive authentication of the article by activating the tag unlocker, or wherein the device comprises a tag disabler to disable the anti-theft functionality of the tag, wherein the processing circuitry is to cause disabling of the anti-theft functionality of the tag (e.g. automatically, e.g. in response to a positive authentication of the article) by activating the tag disabler.
Example 30. The device of Example 29, wherein the tag remover comprises an electromagnet or a permanent or static magnet or wherein the tag unlocker comprises an electromagnet or a permanent or static magnet.
Example 31. The device of Example 29, wherein the tag disabler comprises:
   an electromagnetic wave source; or
   indication circuitry to provide an indication to a (e.g. server of a) security system that detection of the tag is not to provide a further response (e.g. a theft alert) by the security system.
Example 32. The device of Example 31, wherein the device comprises a wired or unwired network connection and the indication circuitry provides the indication by way of the network connection.
Example 33. The device of any of the preceding Examples, comprising a user interface, wherein the processing circuitry is to cause the user interface to provide a perceptible identification of the article depending on a positive authentication of the article by the processing circuitry.
Example 34. The device of any of the preceding Examples, wherein the permission data comprises a permission event identifier, and wherein the processing circuitry is to record or cause recordal of data based on the permission event identifier depending on positive authentication of the article based on the permission data to thereby inhibit authentication, based on the permission data, of a further article having the identifier.
Example 35. The device of any of the preceding Examples, wherein the permission data comprises time data relating to a time associated with permission to take away the article and wherein the processing circuitry is to cause removal of the anti-theft tag from the article or to cause unlocking of the anti-theft tag for removal from the article or to cause disabling of the anti-theft functionality of the tag depending on a positive timing validation based on the time data and current time information relating to a current time.
Example 36. The device of any of the preceding Examples, comprising a wired or unwired network connection.
Example 37. The device of Example 36, wherein the processing circuitry is to communicate with a networked server by way of the network connection.
Example 38. The device of Example 37, wherein authenticating the article by the processing circuitry based on the identifier and the permission data comprises sending the identifier and the permission data to the server and receiving by the processing circuitry from the server an indication of a positive authentication of the article.
Example 39. The device of any of the preceding claims, wherein the permission data comprises any one or more of: a second identifier of the article, an authenticity indicator, an indication of a quantity of articles having the second identifier which is permitted to be taken away, time data relating to a time associated with permission to take away the article, a permission event identifier, a purchase or order identifier.
Example 40. The device of any of Examples 36 to 39, wherein authenticating the article by the processing circuitry based on the identifier and the permission data comprises retrieving from the server based on the permission data any one or more of: a second identifier of the article, an indication of a quantity of articles having the second identifier which is permitted to be taken away, time data relating to a time associated with permission to take away the article, a permission event identifier, a purchase or order identifier.
Example 41. The device of Example 40, wherein authenticating the article by the processing circuitry based on the identifier and the permission data comprises authenticating the article based on the identifier and any one or more of: the second identifier of the article, the indication of a quantity of articles having the second identifier which is permitted to be taken away, the time data, the permission event identifier, the purchase or order identifier, or data derived therefrom.
Example 42. The device of any of the preceding Examples wherein the processing circuitry is to authenticate the article further depending on stored data relating to one or more articles which have already had their anti-theft tags removed, unlocked or disabled based on the permission data.
Example 43. A system comprising:
   a device according to any of Examples 1 to 42, wherein the device comprises a network connection; and
   a server to communicate with the device via the network connection.
Example 44. The system of Example 43 wherein the processing circuitry is to authenticate the article based on information provided by the server.
Example 45. The system of Example 43 or Example 44, comprising:
   an article having an identifier and an anti-theft tag; and
   permission data.
Example 46. The system of Example 45, comprising a user device with the permission data stored thereon.
Example 47. A computer-implemented method comprising:
   obtaining permission data relating to a permission to take away an article having an anti-theft tag;
   obtaining an identifier of the article;
   authenticating the article based on the identifier and the permission data; and
   depending on a positive authentication of the article causing:
      the anti-theft tag to be removed from the article or unlocked for removal from the article (e.g. for removal from the article by a user); or
      the anti-theft functionality of the tag to be disabled.
Example 48. The computer-implemented method of Example 47 comprising causing the anti-theft tag to be removed from the article or unlocked for removal from the article or the anti-theft functionality of the tag to be disabled by actuating an actuator.
Example 49. Machine readable instructions which when executed by processing circuitry cause the processing circuitry to perform the method of Example 47 or Example 48.
Example 50. One or more non-transitory machine readable media storing the machine readable instructions of Example 49.

Where functional units have been described as circuitry, the circuitry may be general purpose processor circuitry configured by program code to perform specified processing functions or special purpose circuitry for performing specified processing functions. The circuitry may also be configured by modification to the processing hardware. Configuration of the circuitry to perform a specified function may be entirely in hardware, entirely in software or using a combination of hardware modification and software execution. Program instructions may be used to configure logic gates of general purpose or special-purpose processor circuitry to perform a processing function.

Circuitry may be implemented, for example, as a hardware circuit comprising custom Very Large Scale Integrated, VLSI, circuits or gate arrays, off-the-shelf semiconductors such as logic chips, transistors, or other discrete components. Circuitry may also be implemented in programmable hardware devices such as field programmable gate arrays, FPGA, programmable array logic, programmable logic devices, A System on Chip, SoC, or the like.

Circuitry may be implemented, for example, as part of a computing device comprising single or multiple cores, or may be implemented as part of a distributed computing system. Alternatively, or additionally, the circuitry may be implemented by way of a virtual machine.

Circuitry may be implemented, for example, with a single or with multiple central processing units (CPUs), or, for example, with a single or with multiple graphics processing units (GPUs).

Machine readable program instructions may be provided on a transitory medium such as a transmission medium or on one or more non-transitory media such as storage media. Such machine readable instructions (computer program code) may be implemented in a high level procedural or object oriented programming language. However, the program(s) may be implemented in assembly or machine language, if desired. In any case, the language may be a compiled or interpreted language, and combined with hardware implementations. Program instructions may be executed on a single processor or on two or more processors in a distributed manner.

For the purposes of the description, a phrase in the form "A / B" or in the form "A and/or B" means (A), (B), or (A and B). For the purposes of the description, a phrase in the form "at least one of A, B, and C" means (A), (B), (C), (A and B), (A and C), (B and C), or (A, B and C).

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment or aspect can be combined in any way and/or combination, for example it may be that apparatus features correspond to method features or vice versa, unless such features are incompatible. The applicant reserves the right to change any originally filed claim or file any new claim accordingly, including the right to amend any originally filed claim to depend from and/or incorporate any feature of any other claim although not originally claimed in that manner.

## Claims

1. A device comprising:
an interface to obtain an identifier of an article, said article having an anti-theft tag;
processing circuity to:
obtain permission data relating to a permission to take away the article;
authenticate the article based on the identifier and the permission data; and
depending on a positive authentication of the article by the processing circuitry, cause:
the anti-theft tag to be removed from the article or unlocked for removal from the article; or
the anti-theft functionality of the tag to be disabled.

2. The device of claim 1, wherein authenticating the article further comprises authenticating the permission data.

3. The device of claim 1 or claim 2, wherein the identifier of the article obtained by the interface is a first identifier of the article and the permission data includes second identifier data relating to a second identifier of the article, and wherein the processing circuitry is to authenticate the article depending on the first identifier and the second identifier data.

4. The device of claim 3, wherein the second identifier data comprises an encrypted second identifier of the article, wherein the processing circuitry is to decrypt the encrypted second identifier to obtain the second identifier and wherein the processing circuitry is to authenticate the article depending on the first identifier and the second identifier.

5. The device of claim 3 or claim 4 wherein the permission data comprises an indication of a quantity of articles associated with the second identifier data permitted to be taken away, and wherein the processing circuitry is to authenticate the article further depending on the indication of the quantity and a count indicating a quantity of articles associated with the second identifier data previously authenticated based on the permission data.

6. The device of any of the preceding claims, wherein the identifier obtained by the interface comprises encoded identifier data and wherein the authentication of the article by the processing circuitry comprises decoding the encoded identifier data to obtain the identifier data.

7. The device of any of the preceding claims, further comprising an interface for detecting the permission data presented in a vicinity of the interface.

8. The device of any of the preceding claims, wherein the permission data comprises encoded permission data, and wherein authenticating the article comprises decoding the encoded permission data.

9. The device of claim 8, wherein the permission data comprises optically encoded permission data, and wherein authenticating the article comprises decoding the optically encoded permission data.

10. The device of any of the preceding claims comprising an actuator, wherein the processing circuitry is to cause the anti-theft tag to be removed from the article, to cause the anti-theft tag to be unlocked for removal from the article, or to cause the anti-theft functionality of the tag to be disabled by actuating the actuator, and wherein the processing circuitry is to automatically actuate the actuator in response to a positive authentication of the article by the processing circuitry.

11. The device of any of the preceding claims, further comprising a user interface, wherein the processing circuitry is to cause the user interface to provide a perceptible identification of the article depending on a positive authentication of the article by the processing circuitry.

12. The device of any of the preceding claims, wherein the permission data comprises a permission event identifier, and wherein the processing circuitry is to record or cause recordal of data based on the permission event identifier depending on positive authentication of the article based on the permission data to thereby inhibit authentication, based on the permission data, of a further article having the identifier.

13. The device of any of the preceding claims, wherein the permission data comprises time data relating to a time associated with permission to take away the article and wherein the processing circuitry is to cause removal of the anti-theft tag from the article, to cause unlocking of the anti-theft tag for removal from the article, or to cause disabling of the anti-theft functionality of the tag depending on a positive timing validation based on the time data and current time information relating to a current time.

14. A computer-implemented method comprising:
obtaining an identifier of an article having an anti-theft tag;
obtaining permission data relating to a permission to take away the article;
authenticating the article based on the identifier and the permission data; and
depending on a positive authentication of the article, causing:
the anti-theft tag to be removed from the article or unlocked for removal from the article; or
the anti-theft functionality of the tag to be disabled.

15. Machine readable instructions which when executed by processing circuitry cause the processing circuitry to perform the method of claim 14.
